# EUROPEAN PATENT SPECIFICATION

(11) **EP 4 407 751 B1**
(45) Date of publication and mention of the grant of the patent: **03.09.2025**
(21) Application number: 24152045.1
(22) Date of filing: 16.01.2024
(51) Int. Cl.: H01M 10/613, H01M 10/647, H01M 10/6553, H01M 10/6554, H01M 10/6556, H01M 50/507, H01M 50/519

(54) **BATTERY PACK AND ELECTRIC DEVICE**
BATTERIEPACK UND ELEKTRISCHE VORRICHTUNG
BLOC-BATTERIE ET DISPOSITIF ÉLECTRIQUE

(30) Priority: 17.01.2023 CN 202310072875
(43) Date of publication of application: 31.07.2024
(73) Proprietor: Xiamen Ampack Technology Limited, Xiamen City, Fujian Province 361000 (CN)
(72) Inventor: PENG, Fanggui, Xiamen City, Fujian Province, People s Republic of China, 361000 (CN); WU, Mingjie, Xiamen City, Fujian Province, People s Republic of China, 361000 (CN); NONG, Wenbin, Xiamen City, Fujian Province, People s Republic of China, 361000 (CN)
(74) Representative: Icosa

(56) References cited:
- CN-A- 113 381 094
- CN-A- 113 394 481
- CN-A- 115 425 321
- CN-A- 115 548 585

## Description

### TECHNICAL FIELD

This application relates to the field of energy storage technologies, and in particular, to a battery pack and an electric device, see e.g CN 115 425 321 A on which the preamble of claim 1 is based.

### BACKGROUND

When a battery is in use, a cell will generate a large amount of heat. To avoid the battery temperature being extremely high, it is necessary to dissipate heat of the battery. The traditional way of dissipating heat is to increase a heat dissipation member between cells, but this way of dissipating heat is limited to heat dissipation of the cells.

### SUMMARY

In view of this, it is necessary to provide a battery pack and an electric device, so as to improve heat dissipation of a cell.

The present invention provides a battery pack including a housing assembly, a cell assembly, a first circuit board, a support, and a thermally conductive member. The cell assembly is accommodated in the housing assembly. The cell assembly includes a plurality of cells. Each cell includes a cell housing, an electrode assembly disposed in the cell housing, and an electrode terminal connected to the electrode assembly and extending out of the cell housing. The electrode terminal runs through the first circuit board and is connected to a side of the first circuit board facing away from the cell housing. The support is connected to the first circuit board, where the first circuit board is disposed between the cell housing and the support. The support is provided with a first opening, and the thermally conductive member is disposed in the first opening. The thermally conductive member is connected to at least some of electrode terminals. The support is provided with the first opening, the thermally conductive member is disposed in the first opening, and the thermally conductive member is connected to the at least some of electrode terminals, so that heat of the electrode terminal is dissipated through the thermally conductive member, thereby improving heat dissipation efficiency. The cell housing and the first circuit board are disposed in a first direction. The plurality of cells are stacked in a third direction.
The battery pack further includes a heat sink. The heat sink is disposed on a side of the support facing away from the first circuit board. The thermally conductive member includes a first surface and a second surface disposed opposite to each other in the first direction. The first surface is connected to the electrode terminal of at least some of the plurality of cells through the first opening. The second surface is connected to the heat sink. The heat sink is disposed, so that heat of the electrode terminal is conducted through the first surface to the second surface and through the second surface to the heat sink, which facilitates conduction of heat of the electrode terminal.

Optionally in some embodiments of this application, the first circuit board is provided with a first conductive sheet. Electrode terminals of adjacent cells run through the first circuit board and are connected to the first conductive sheet in a stacked manner. The thermally conductive member is connected to a side of the electrode terminal facing away from the first conductive sheet, and the third direction is perpendicular to the first direction. It is convenient for the thermally conductive member to connect the electrode terminal by connecting the electrode terminal through the first circuit board to the first conductive sheet in the stacked manner.

Optionally, in some embodiments of this application, the first conductive sheet may be a copper foil disposed on the first circuit board, where the copper foil is connected to wiring on the first circuit board.

Optionally, in some embodiments of this application, the first conductive sheet may be a conductive sheet disposed on the first circuit board, where the conductive sheet is welded to the first circuit board.

Optionally, in some embodiments of this application, each electrode terminal connected to the first conductive sheet includes two first ends disposed in a second direction. The first opening includes two first edges disposed in the second direction. When viewed in a direction opposite to the first direction, the two first edges are located between the two first ends in the second direction, and the second direction is perpendicular to the first direction. A side end of the electrode terminal is located away from the first opening, reducing the possibility that burrs of the electrode terminal pierce the thermally conductive member.

Optionally, in some embodiments of this application, the first conductive sheet includes two second ends disposed in the second direction. When viewed in a direction opposite to the first direction, the two first ends are located between the two second ends in the second direction. A side end of the first conductive sheet is located away from the first opening, reducing the possibility that burrs of the first conductive sheet pierce the thermally conductive member.

Optionally, in some embodiments of this application, the first surface protrudes from the first opening in a direction opposite to the first direction, helping the first surface to be connected to a welding portion of the electrode terminal. The second surface protrudes from the first opening in the first direction and is connected to the heat sink, helping the second surface to be connected to the heat sink.

Optionally, in some embodiments of this application, the housing assembly includes a first housing. The first housing includes a first wall and a second wall disposed in the third direction, a third wall and a fourth wall disposed in the second direction, and a bottom wall. The bottom wall is connected to the first wall, the second wall, the third wall, and the fourth wall to form a first space. The heat sink is disposed in the first space. The heat sink is connected to inner surfaces of the first wall, the second wall, the third wall, and the fourth wall, and the heat sink may be secured to an inner wall of the first housing.

Optionally, in some embodiments of this application, the battery pack further includes a first connection member. The first connection member is partially disposed between the support and the heat sink. The support and the heat sink are bonded through the first connection member, to seal and insulate a space between the cell assembly and the heat sink. This may reduce a risk of short circuit between the heat sink and the electrode terminal.

Optionally, in some embodiments of this application, in the first direction, a side of the support facing the heat sink is provided with a first convex part. The first convex part is connected to the heat sink. A first gap is provided between the support and the heat sink. The first connection member is partially disposed in the first gap. The first convex part allows for presence of the first gap between a support body and the heat sink, which facilitates the first connection member being disposed in the first gap, to seal and insulate a space between the support and the heat sink.

Optionally, in some embodiments of this application, the support includes the support body. The first opening is provided on the support body. The support body is provided with a plurality of first through holes. At least one of the first through holes is configured to allow the first connection member to flow into the first gap. At least a part of the first connection member is disposed in at least one first through holes. The first through hole is provided to allow the first connection member to flow into the first gap.

Optionally, in some embodiments of this application, when viewed in the direction opposite to the first direction, a part of at least one electrode terminal is located in at least one first through hole, further improving heat dissipation of the electrode terminal; and/or
when viewed in the direction opposite to the first direction, a part of at least one first conductive sheet is located in at least one first through hole, further improving heat dissipation of the first conductive sheet.

Optionally, in some embodiments of this application, the support includes a support body, where the support body covers a part of the first circuit board, insulating the first circuit board.

Optionally, in some embodiments of this application, the first connection member is partially disposed between the first circuit board and the support. The support and the first circuit board are connected by the first connection member, which can further insulate the first circuit board.

Optionally, in some embodiments of this application, a side of the support facing the first circuit board is provided with a second convex part in the direction opposite to the first direction. The second convex part is connected to the first circuit board. A second gap is provided between the support and the first circuit board. The first connection member is partially disposed in the second gap. The second convex part allows for presence of the second gap between the support and the first circuit board, which facilitates the first connection member being partially disposed in the second gap, to seal and insulate a space between the support and the first circuit board.

Optionally, in some embodiments of this application, the first connection member covers a part of the electrode terminal extending out of the cell housing to strengthen fixation of the electrode terminal and improve heat dissipation of the electrode terminal.

Optionally, in some embodiments of this application, all third holes are available for the first connection member to flow between the thermally conductive member and the first circuit board. At least a part of the first connection member is located in the third hole, improving heat dissipation.

Optionally, in some embodiments of this application, the first circuit board is provided with a third hole. When viewed in the direction opposite to the first direction, the third hole is located in the first opening, and the third hole is separated from the first conductive sheet. At least one third hole is configured to allow the first connection member to flow between the thermally conductive member and the first circuit board. At least a part of the first connection member is located in the at least one third hole, further improving heat dissipation.

Optionally, in some embodiments of this application, the first connection member is configured to be formed by providing a flowing first insulation material in the battery pack and curing the first insulation material.

Optionally, in some embodiments of this application, thermal conductivity D of the thermally conductive member satisfies 4 W/(mK) ≤ D≤ 6 W/(mK), thereby improving a thermally conductive effect of the thermally conductive member.

Optionally, in some embodiments of this application, the thermal conductivity of the thermally conductive member is higher than thermal conductivity of the first connection member, improving a thermally conductive effect of the thermally conductive member.

Optionally, in some embodiments of this application, the first connection member connects the inner surfaces of the first wall, the second wall, the third wall, and the fourth wall, to seal and insulate the first space. The first connection member can improve protection of the battery pack, and reduce influence of external impurities on the first circuit board and the electrode terminal.

Optionally, in some embodiments of this application, the first circuit board further includes a second conductive sheet and a third conductive sheet. In the third direction, an electrode terminal of one of outermost cells is connected to the second conductive sheet, and an electrode terminal of another outermost cell is connected to the third conductive sheet. The support body is provided with a plurality of second through holes. When viewed in the direction opposite to the first direction, a part of the second conductive sheet is located in the second through hole, a part of the third conductive sheet is located in the second through hole, and a part of the first connection member is located in the second through hole; and the third direction is perpendicular to the first direction. Heat of the electrode terminal connected to the second conductive sheet, heat of the second conductive sheet, heat of the electrode terminal connected to the third conductive sheet, and heat of the third conductive sheet are conducted to the heat sink through the first connection member in the second through hole, which facilitates heat dissipation.

Optionally, in some embodiments of this application, when viewed in the direction opposite to the first direction, a part of a fourth conductive sheet is disposed in the second through hole; and heat of an electrode terminal connected to the fourth conductive sheet and heat of the fourth conductive sheet are conducted to the heat sink through the first connection member in the second through hole, which facilitates heat dissipation.

Optionally, in some embodiments of this application, the first housing is provided with a first pore and a second pore, and the heat sink is provided with a first channel. The first channel communicates with the first pore and the second pore, which is conducive to improving heat dissipation efficiency.

Optionally, in some embodiments of this application, a second circuit board and a sampling wire harness are further included. The heat sink is located between the first circuit board and the second circuit board. The heat sink is provided with a third accommodation space. One end of the sampling wire harness is connected to the first circuit board, and another end of the sampling wire harness runs through the third accommodation space and is connected to the second circuit board.

Optionally, in some embodiments of this application, a connection support is further included, where a second space is formed between the connection support and the heat sink. The connection support is provided with a support through hole. The support through hole communicates with second space, which facilitates heat dissipation of the second circuit board by the heat sink. An embodiment of this application further provides an electric device including the battery pack according to any one of the foregoing some embodiments.

According to the above-described battery pack and electric device, the support is provided with the first opening, the thermally conductive member is disposed in the first opening, and the thermally conductive member is connected to at least some of electrode terminals, so that heat of the electrode terminal is dissipated through the thermally conductive member, thereby improving heat dissipation efficiency.

### BRIEF DESCRIPTION OF DRAWINGS

FIG. 1 is a schematic structural diagram of a battery pack according to some embodiments.
FIG. 2 is a schematic structural diagram of a battery pack according to some embodiments from another perspective.
FIG. 3 is a schematic exploded view of a partial structure of a battery pack according to some embodiments.
FIG. 4 is a cross-sectional view of the battery pack in FIG. 1 along III-III.
FIG. 5 is a locally enlarged schematic diagram of part V in FIG. 4.
FIG. 6 is a schematic exploded view of a second housing and a second circuit board according to some embodiments.
FIG. 7 is a schematic structural diagram of a single cell according to some embodiments.
FIG. 8 is a schematic exploded view of a single cell according to some embodiments.
FIG. 9 is a schematic diagram of a partial structure of a battery pack according to some embodiments.
FIG. 10 is a schematic exploded view of FIG. 9.
FIG. 11 is a schematic exploded view of a cell assembly in FIG. 10 according to some embodiments.
FIG. 12 is a schematic structural diagram of a cell and a first circuit board according to some embodiments.
FIG. 13 is a schematic structural diagram of a support according to some embodiments.
FIG. 14 is a schematic structural diagram of a support according to some embodiments from another perspective.
FIG. 15 is a schematic structural diagram of a cell, a first circuit board, and a support according to some embodiments.
FIG. 16 is a schematic structural diagram of a cell, a first circuit board, a support, and a thermally conductive member according to some embodiments.
FIG. 17 is a schematic structural diagram of a heat sink according to some embodiments.
FIG. 18 is a cross-sectional view of a battery pack along IV-IV according to some embodiments.
FIG. 19 is a locally enlarged schematic diagram of part II in FIG. 18.
FIG. 20 is a schematic structural diagram of an electric device according to some embodiments.

**Reference signs of main components:**

| | |
|---|---|
| Battery pack | 100 |
| Housing assembly | 10 |
| First housing | 11 |
| First wall | 111 |
| Fifth connection hole | 1111 |
| Third fastener | 1112 |
| Fourth fastener | 1113 |
| Seventh connection hole | 1114 |
| First pore | 10a |
| Second wall | 112 |
| Second pore | 10b |
| Third wall | 113 |
| First region | 113a |
| First housing insulation member | 1130 |
| First connection hole | 113b |
| First fastener | 113c |
| Fourth wall | 114 |
| Third connection hole | 114b |
| Second fastener | 114c |
| Bottom wall | 115 |
| First space | 101 |
| Second space | 102 |
| Second housing | 12 |
| Second housing recess | 12a |
| Second circuit board | 13 |
| First connection portion | 131 |
| Second connection portion | 132 |
| Connection support | 14 |
| Support through hole | 141 |
| Cell assembly | 20 |
| Cell | 21 |
| Cell housing | 211 |
| First casing | 2111 |
| Second casing | 2112 |
| First extension portion | 2113 |
| Second extension portion | 2114 |
| First sealing portion | 2115 |
| Second sealing portion | 2116 |
| First part | 211a |
| Second part | 211b |
| First recess | 211c |
| Electrode assembly | 212 |
| Electrode terminal | 213 |
| Welding portion | 213a |
| First end | 2131 |
| First terminal | 213b |
| Second terminal | 213c |
| First column of cells | 21a |
| Second column of cells | 21b |
| Heat dissipation portion | 22 |
| First elastic member | 221a |
| First circuit board | 30 |
| Hole | 31 |
| First hole | 311 |
| Second hole | 312 |
| Third hole | 313 |
| First conductive sheet | 32 |
| Second end | 321 |
| Second conductive sheet | 33 |
| Third conductive sheet | 34 |
| Fourth conductive sheet | 35 |
| Fourth hole | 36 |
| Sampling wire harness | 100a |
| First electrical connection portion | 100b |
| First conductive portion | 110 |
| First insulation portion | 120 |
| Second electrical connection portion | 100c |
| Second conductive portion | 130 |
| Second insulation portion | 140 |
| Support | 40 |
| First opening | 40a |
| First gap | 40b |
| Second gap | 40c |
| Third convex part | 40d |
| First edge | 401 |
| Support body | 41 |
| Second opening | 42 |
| First bulge | 402 |
| Third opening | 43 |
| Second bulge | 403 |
| Fourth opening | 45 |
| Guide plate | 451 |
| First convex part | 46 |
| Second convex part | 47 |
| First through hole | 48 |
| Second through hole | 49 |
| Thermally conductive member | 50 |
| First surface | 50a |
| Second surface | 50b |
| Heat sink | 60 |
| First channel | 60a |
| First side wall | 60b |
| Second connection hole | 601 |
| Second side wall | 60c |
| Fourth connection hole | 602 |
| Third side wall | 60d |
| Sixth connection hole | 603 |
| Fourth side wall | 60e |
| Eighth connection hole | 604 |
| First accommodation space | 61 |
| Second accommodation space | 62 |
| Third accommodation space | 63 |
| Fourth convex part | 64 |
| First connection member | 70 |
| Second insulation member | 80 |
| Third insulation member | 81 |
| Fourth insulation member | 82 |
| Electric device | 200 |
| First direction | X |
| Second direction | Y |
| Third direction | Z |

This application will be further described with reference to the accompanying drawings in the following specific some embodiments.

### DETAILED DESCRIPTION OF EMBODIMENTS

The following specific some embodiments are exemplary rather than restrictive, are intended to provide a basic understanding of this application, and are not intended to identify critical or decisive elements of this application or to limit the protection scope.

When one component is assumed as being "disposed on/in" another component, the component may be provided directly on/in the another component or with a component possibly present therebetween. When one component is assumed as being "connected to" another component, it may be connected to the another component directly or with a component possibly present therebetween.

It can be understood that the term "perpendicular" or "equal" is used to describe an ideal state between two parts. In an actual state of production or use, there may be an approximate "perpendicular" or "equal" state between the two parts. For example, in conjunction with a numerical description, "perpendicular" may refer to a range of included angles between two straight lines of 90°±10°, "perpendicular" may refer to a range of dihedral angles between two planes of 90°±10°, or "perpendicular" may refer to a range of included angles between a straight line and a plane of 90°±10°. The two parts described as "perpendicular" may not be absolutely straight lines or planes, or may be roughly straight lines or planes. From a macroscopic point of view, if a part is a straight line or a plane in an overall extension direction, the part can be regarded as a "straight line" or a "plane".

The term "parallel" is used to describe an ideal state between two parts. In an actual state of production or use, there may be an approximate "parallel" state between the two parts. For example, in conjunction with a numerical description, "parallel" may refer to a range of included angles between two straight lines of 180°±10°, "parallel" may refer to a range of dihedral angles between two planes of 180°±10°, or "parallel" may refer to a range of included angles between a straight line and a plane of 180°±10°. The two parts described as "parallel" may not be absolutely straight lines or planes, or may be roughly straight lines or planes. From a macroscopic point of view, if a part is a straight line or a plane in an overall extension direction, the part can be regarded as a "straight line" or a "plane".

Unless otherwise defined, the term "a plurality of" is used herein to describe the number of parts, and specifically means that there are two or more parts.

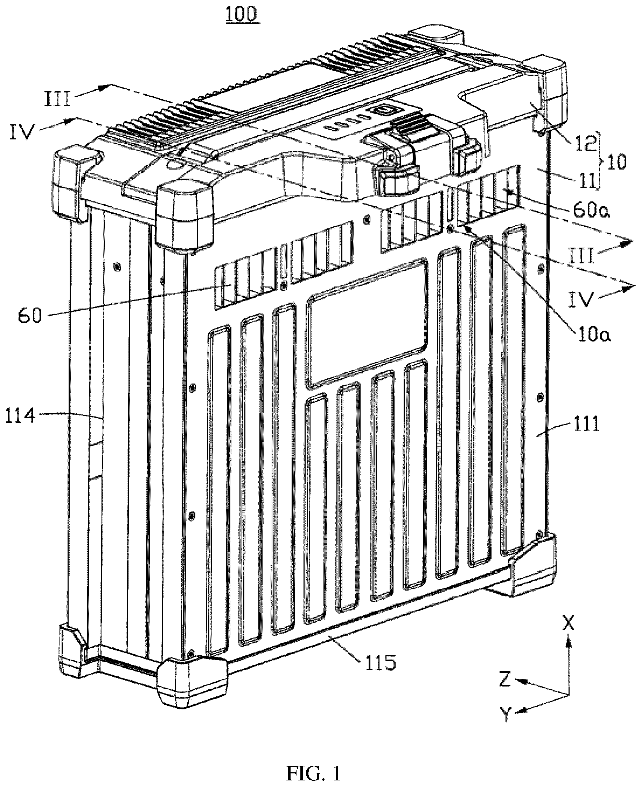

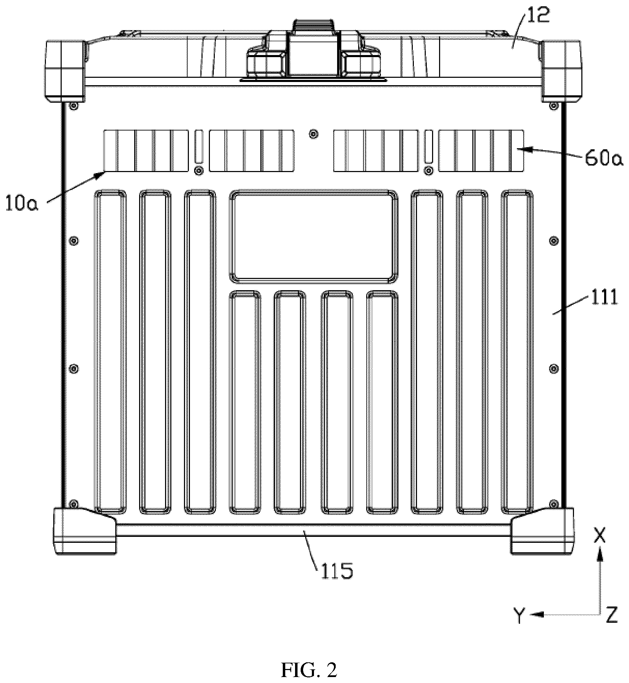

Refer to FIG. 1 to FIG. 5. An embodiment of this application provides a battery pack 100 including a housing assembly 10, a cell assembly 20, a first circuit board 30, a support 40, and a thermally conductive member 50. The cell assembly 20 is disposed in the housing assembly 10. The first circuit board 30 is disposed in the housing assembly 10 and connected to the cell assembly 20. The cell assembly 20 includes a plurality of cells 21, where each cell includes a cell housing 211, an electrode assembly 212 disposed in the cell housing 211, and an electrode terminal 213 connected to the electrode assembly 212 and led out of the cell housing 211. The electrode terminal 213 runs through the first circuit board 30 and is connected to a side of the first circuit board 30 facing away from the cell housing 211. The support 40 is connected to a side of the first circuit board 30 facing away from the cell assembly 20, and the first circuit board 30 is disposed between the cell housing 211 and the support 40. The support 40 is provided with a first opening 40a. The thermally conductive member 50 is disposed in the first opening 40a, where the thermally conductive member 50 is connected to at least some of electrode terminals 213 through the first opening 40a. Heat of the electrode terminal 213 is dissipated through the thermally conductive member 50, improving heat dissipation efficiency.

In an embodiment, the housing assembly 10 includes a first housing 11 and a second housing 12, and the first housing 11 is connected to the second housing 12. The first housing 11 includes a first wall 111, a second wall 112, a third wall 113, a fourth wall 114, and a bottom wall 115. The first wall 111 and the second wall 112 are disposed opposite to each other, and the third wall 113 and the fourth wall 114 are disposed opposite to each other. The bottom wall 115 and the second housing 12 are disposed opposite to each other. The first wall 111 is connected to the third wall 113 and the fourth wall 114, the second wall 112 is connected to the third wall 113 and the fourth wall 114, and the bottom wall 115 is connected to the first wall 111, the second wall 112, the third wall 113, and the fourth wall 114, to form a first space 101. The first space 101 is used to accommodate at least one component in the cell assembly 20, the first circuit board 30, the support 40, and the thermally conductive member 50.

Optionally, the first wall 111, the second wall 112, the third wall 113, the fourth wall 114, and the bottom wall 115 may be connected to form the first housing 11 by screw locking, welding, or bonding. Optionally, the first wall 111, the second wall 112, the third wall 113, the fourth wall 114, and the bottom wall 115 may alternatively be integrally formed, for example, an injection molding process is provided to form an integrally formed structure, for another example, a metal material is extruded to form an integrally formed structure.

Optionally, the first housing 11 includes a thermally conductive material, which can improve heat dissipation performance. Optionally, the thermally conductive material includes a thermally conductive metal material and a thermally conductive insulation material, where the insulation material may cover an outer surface of the thermally conductive metal material. Optionally, the thermally conductive metal material of the first housing 11 includes aluminum. Optionally, a surface of the first housing 11 includes a thermally conductive metal material, which is conducive to improving heat dissipation.

To better illustrate a structure of the battery pack 100, the structure of the battery pack 100 will be described in combination with coordinate axes X, Y, and Z. The coordinate axes X, Y, and Z are perpendicular to each other, a direction X is defined as a first direction, a direction Y is defined as a second direction, and a direction Z is defined as a third direction. The first direction X is a direction in which the bottom wall 115 and the second housing 12 are disposed opposite to each other, the second direction Y is a direction in which the third wall 113 and the fourth wall 114 disposed opposite to each other, and the third direction Z is a direction in which the first wall 111 and the second wall 112 disposed opposite to each other. The first direction X is perpendicular to both the second direction Y and the third direction Z.

The battery pack 100 further includes a heat sink 60, where the heat sink 60 is disposed in the first space 101 and located on a side of the support 40 facing away from the first circuit board 30. The housing assembly 10 is provided with a first pore 10a and a second pore 10b. The first pore 10a and the second pore 10b are connected to the exterior. The heat sink 60 is provided with a first channel 60a. The first channel 60a communicates with the first pore 10a and the second pore 10b. The heat sink 60 dissipates the heat of the electrode terminal 213 from the first pore 10a and the second pore 10b through the first channel 60a to the external environment, further improving heat dissipation of the electrode terminal 213 and reducing the temperature of the battery pack 100.

Optionally, heat of the first circuit board 30 may alternatively be transferred to the heat sink 60 through the thermally conductive member 50, and the heat sink 60 may dissipate the heat of the first circuit board 30, further improving heat dissipation of the battery pack 100.

In an embodiment, the battery pack 100 may utilize external air to carry away heat of the first circuit board 30 and heat of the cell assembly 20 through flowing of air. In an embodiment, the battery pack 100 may be applied to a device that is in a static state during use, and when the battery pack 100 is in a static state, heat dissipation can be implemented through natural wind or an external air-cooling device. In an embodiment, the battery pack 100 may be applied to a device that is in a dynamic state during use, for example, a drone or an electric motor bicycle. Because air flow speed is higher during movement of the device, quick heat dissipation for the battery pack 100 can be implemented.

In an embodiment, the first pore 10a is provided on the first wall 111 and the second pore 10b is provided on the second wall 112. In the third direction Z, the first pore 10a runs through the first wall 111 and the second pore 10b runs through the second wall 112. The heat sink 60 is connected to inner surfaces of the first wall 111, the second wall 112, the third wall 113, and the fourth wall 114, and the first channel 60a communicates with the first pore 10a and the second pore 10b. When the battery pack 100 moves along the third direction Z or a wind direction of the external air-cooling device is the third direction Z, the first pore 10a is an air inlet and the second pore 10b is an air outlet. Air enters the first pore 10a, flows through the first channel 60a, and flows out of the second pore 10b, improving heat dissipation. When the battery pack 100 moves along a direction opposite to the third direction Z or a wind direction of the external air-cooling device is a direction opposite to the third direction Z, the first pore 10a is an air outlet and the second pore 10b is an air inlet. Optionally, the first pore 10a may alternatively be provided on the third wall 113 and the second pore 10b may alternatively be provided on the fourth wall 114. Optionally, the second pore 10b is provided on the second wall 112 and the first pore 10a may alternatively be provided on the third wall 113.

In an embodiment, in the third direction Z, a projection of the first pore 10a overlaps a projection of the second pore 10b. It can be understood that, in the third direction Z, the projection of the first pore 10a partially overlaps the projection of the second pore 10b, the projection of the first pore 10a completely covers the projection of the second pore 10b, or the projection of the second pore 10b completely covers the projection of the first pore 10a. In a specific implementation of this application, in the third direction Z, the projection of the first pore 10a is larger than and covers the projection of the second pore 10b. When the battery pack 100 moves along the third direction Z or the wind direction of the external air-cooling device is in the third direction Z, the first pore 10a is an air inlet and the second pore 10b is an air outlet. A pore diameter of the first pore 10a is larger than a pore diameter of the second pore 10b, which enhances airflow convection and further improves heat dissipation.

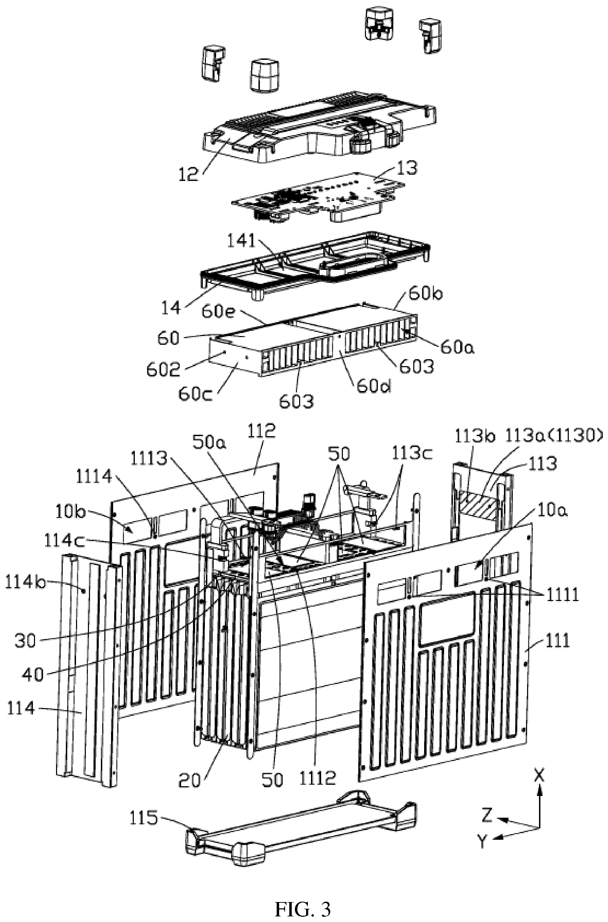

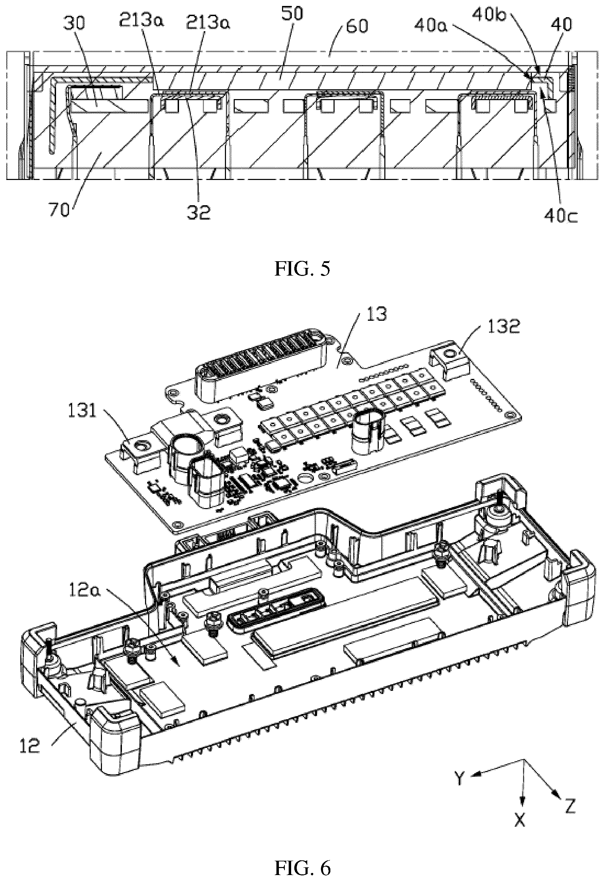

Refer to FIG. 3 and FIG. 6. In an embodiment, the battery pack 100 further includes a second circuit board 13. The second housing 12 has a second housing recess 12a, the second circuit board 13 is disposed in the second housing recess 12a, and the second circuit board 13 and the second housing 12 are disposed by insulating from each other. In the first direction X, the heat sink 60 is disposed between the first circuit board 30 and the second circuit board 13. The second circuit board 13 is provided with a first connection portion 131 and a second connection portion 132. The first connection portion 131 and the second connection portion 132 are electrically connected to the first circuit board 30.

In an embodiment, the second circuit board 13 includes a BMS (Battery Management System) assembly. The BMS assembly includes a plurality of electronic components, and the plurality of electronic components implement functions such as controlling, protection, communication, power calculation, signal transmission, and electricity transmission for the cell 21. Optionally, the second circuit board 13 includes a flexible printed circuit (FPC, Flexible Printed Circuit) board. Optionally, the second circuit board 13 includes a printed circuit board (PCB, Printed Circuit Board), and the second circuit board 13 is provided with a plurality of wires (not shown in the figure).

In an embodiment, the battery pack 100 further includes a connection support 14, where the connection support 14 is disposed between the first housing 11 and the second housing 12, and the first housing 11 and the second housing 12 are connected to the connection support 14. The connection support 14 is disposed between the second circuit board 13 and the heat sink 60, which can reduce a risk of short circuit between the second circuit board 13 and the heat sink 60. Optionally, the connection support 14 is made of an insulation material.

In an embodiment, a second space 102 is formed between the connection support 14 and the heat sink 60, the connection support 14 is provided with a support through hole 141, and the support through hole 141 communicates with the second space 102, which facilitates heat dissipation of the second circuit board 13 by the heat sink 60. Heat generated by the second circuit board 13 congregates in the second space 102. When heat dissipation is performed in the first channel 60a, the surface temperature of the heat sink 60 close to the second circuit board 13 is low, and the heat generated by the second circuit board 13 is transferred to a surface of the heat sink 60, which can dissipate the heat of the second circuit board 13.

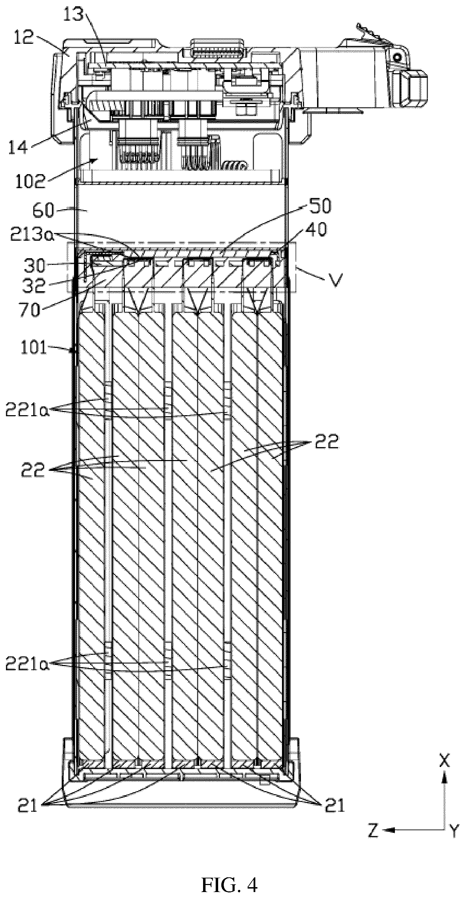

Refer to FIG. 4, FIG. 5, and FIG. 19. In an embodiment, the battery pack 100 further includes a first connection member 70. The first connection member 70 is connected to the inner surfaces of the first wall 111, the second wall 112, the third wall 113, and the fourth wall 114, and the first connection member 70 bonds and connects the cell assembly 20, the first circuit board 30, the support 40, and the heat sink 60, to seal and insulate a space between the cell assembly 20 and the heat sink 60. This can reduce a risk of short circuit between the heat sink 60 and the electrode terminal 213. When the battery pack 100 is subjected to an external impact force, the first connection member 70 can improve protection of the battery pack 100 and reduce impact of external impurities, for example, water, on the first circuit board 30 and the electrode terminal 213.

Optionally, the first connection member 70 has higher thermal conductivity, which is conducive to improving heat dissipation of the battery pack 100. The thermal conductivity of the first connection member 70 is A, where 0.8 W/(mK) < A ≤ 3.0 W/(mK). The thermal conductivity A satisfies any one of 0.9 W/(mK), 1.0 W/(mK), 1.1 W/(mK), 1.2 W/(mK), 1.3 W/(mK), 1.4 W/(mK), 1.5 W/(mK), 1.6 W/(mK), 1.7 W/(mK), 1.8 W/(mK), 1.9 W/(mK), 2.0 W/(mK), 2.1 W/(mK), 2.2 W/(mK), 2.3 W/(mK), 2.4 W/(mK), 2.5 W/(mK), 2.6 W/(mK), 2.7 W/(mK), 2.8 W/(mK), 2.9 W/(mK), or 3.0 W/(mK).

In an embodiment, the first connection member 70 is configured to be formed by providing a flowing first insulation material in the battery pack 100 and curing the first insulation material. Optionally, the first connection member 70 includes one of a polyurethane adhesive, an epoxy adhesive, and silica gel, which can reduce weight of the first connection member 70. Optionally, the first connection member 70 includes a foam adhesive. In an embodiment, the cell assembly 20, the first circuit board 30, the support 40, and the heat sink 60 are mounted in the first housing 11, the heat sink 60 is connected to the first housing 11, and then the first housing 11 is inverted, so that the flowing first insulation material is injected into the battery pack 100. After the inversion, the heat sink 60, the support 40, and the first circuit board 30 are disposed sequentially in the first direction. Optionally, the flowing first insulation material is injected into the battery pack 100 from the bottom of the cell assembly 20 in the first direction X.

Optionally, the viscosity B of the first connection member 70 satisfies 800 mpa.s ≤ A ≤ 1000 mpa.s, which is conducive to better filling into gaps between the cell assembly 20, the first circuit board 30, the support 40, and the heat sink 60. For example, the viscosity B satisfies any one of 800 mpa.s, 810 mpa.s, 820 mpa.s, 830 mpa.s, 840 mpa.s, 850 mpa.s, 860 mpa.s, 870 mpa.s, 880 mpa.s, 890 mpa.s, 900 mpa.s, 910 mpa.s, 920 mpa.s, 930 mpa.s, 940 mpa.s, 950 mpa.s, 960 mpa.s, 970 mpa.s, 980 mpa.s, 990 mpa.s, or 1000 mpa.s

Refer to FIG. 3. The third wall 113 has a first region 113a, the first region 113a is provided with a first housing insulation member 1130, and the heat sink 60 has a first side wall 60b and a second side wall 60c disposed opposite to each other in the second direction Y. The third wall 113 is connected to the first side wall 60b, and the first housing insulation member 1130 is located between the first region 113a and the first side wall 60b. The first housing insulation member 1130 is disposed in a gap between the first region 113a and the first side wall 60b. This can reduce the first insulation material from flowing in the gap between the first region 113a and the first side wall 60b when the first housing 11 is inverted and the first connection member 70 is injected. Optionally, the first housing insulation member 1130 has thermal conductivity and can transfer heat of the heat sink 60 to the third wall 113. Optionally, the first housing insulation member 1130 includes an adhesive. Optionally, the adhesive includes a thermally conductive adhesive. Optionally, thermal conductivity of the thermally conductive adhesive is C, where 2.5 W/(mK) < C ≤ 5.0 W/(mK). The thermal conductivity C satisfies any one of 2.6 W/(mK), 2.7 W/(mK), 2.8 W/(mK), 2.9 W/(mK), 3.0 W/(mK), 3.1 W/(mK), 3.2 W/(mK), 3.3 W/(mK), 3.4 W/(mK), 3.5 W/(mK), 3.6 W/(mK), 3.7 W/(mK), 3.8 W/(mK), 3.9 W/(mK), 4.0 W/(mK), 4.1 W/(mK), 4.2 W/(mK), 4.3 W/(mK), 4.4 W/(mK), 4.5 W/(mK), 4.6 W/(mK), 4.7 W/(mK), 4.8 W/(mK), 4.9 W/(mK), or 5.0 W/(mK). Optionally, the first housing insulation member 1130 can further prevent external impurities such as water from entering the battery pack 100.

Optionally, the fourth wall 114 has a second region (not shown in the figure), and the second region is provided with a second housing insulation member (not shown in the figure). The fourth wall 114 is connected to the second side wall 60c, and the second housing insulation member is located between the second region and the second side wall 60c to connect the heat sink 60 and the fourth wall 114. The second housing insulation member is disposed in a gap between the second region and the second side wall 60c. This can reduce a flowing insulation material from flowing in the gap between the second region and the second side wall 60c when the first housing 11 is inverted and the first connection member 70 is injected. Optionally, the second housing insulation member has thermal conductivity and can transfer the heat of the heat sink 60 to the fourth wall 114. Optionally, the second housing insulation member includes an adhesive. Optionally, the adhesive includes a thermally conductive adhesive. Optionally, a range of thermal conductivity of the thermally conductive adhesive is C, where 2.5 W/(mK) < C ≤ 5.0 W/(mK). The thermal conductivity C satisfies any one of 2.6 W/(mK), 2.7 W/(mK), 2.8 W/(mK), 2.9 W/(mK), 3.0 W/(mK), 3.1 W/(mK), 3.2 W/(mK), 3.3 W/(mK), 3.4 W/(mK), 3.5 W/(mK), 3.6 W/(mK), 3.7 W/(mK), 3.8 W/(mK), 3.9 W/(mK), 4.0 W/(mK), 4.1 W/(mK), 4.2 W/(mK), 4.3 W/(mK), 4.4 W/(mK), 4.5 W/(mK), 4.6 W/(mK), 4.7 W/(mK), 4.8 W/(mK), 4.9 W/(mK), or 5.0 W/(mK). Optionally, the second housing insulation member can further prevent external impurities such as dust from entering the cell assembly 20.

In an embodiment, the third wall 113 is provided with a first connection hole 113b, and the first side wall 60b is provided with a second connection hole 601. The battery pack 100 includes a first fastener 113c, and the heat sink 60 is fixed to the third wall 113 by the first fastener 113c running through the first connection hole 113b and the second connection hole 601.

In an embodiment, the fourth wall 114 is provided with a third connection hole 114b, and the second side wall 60c is provided with a fourth connection hole 602. The battery pack 100 includes a second fastener 114c, and the heat sink 60 is fixed to the fourth wall 114 by the second fastener 114c running through the third connection hole 114b and the fourth connection hole 602.

In an embodiment, the first pore 10a and the second pore 10b are provided in plurality and are provided in a same quantity, and the projection of the first pore 10a overlaps the projection of the second pore 10b in the third direction Z. Optionally, the plurality of first pores 10a are spaced apart, and a fifth connection hole 1111 is provided between adjacent first pores 10a. The heat sink 60 includes a third side wall 60d and a fourth side wall 60e disposed opposite to each other in the third direction Z. The third side wall 60d is provided with a sixth connection hole 603. A projection of the fifth connection hole 1111 overlaps a projection of the sixth connection hole 603 in the third direction Z. The battery pack 100 includes a third fastener 1112. The third fastener 1112 is disposed between the fifth connection hole 1111 and the sixth connection hole 603 to connect the heat sink 60 and the first wall 111.

In an embodiment, the battery pack 100 includes a fourth fastener 1113. Optionally, the plurality of second pores 10b are spaced apart, a seventh connection hole 1114 is provided between adjacent second pores 10b, and the fourth side wall 60e is provided with an eighth connection hole 604. A projection of the seventh connection hole 1114 overlaps a projection of the eighth connection hole 604 in the third direction Z. The fourth fastener 1113 is disposed between the seventh connection hole 1114 and the eighth connection hole 604 to connect the heat sink 60 and the second wall 112.

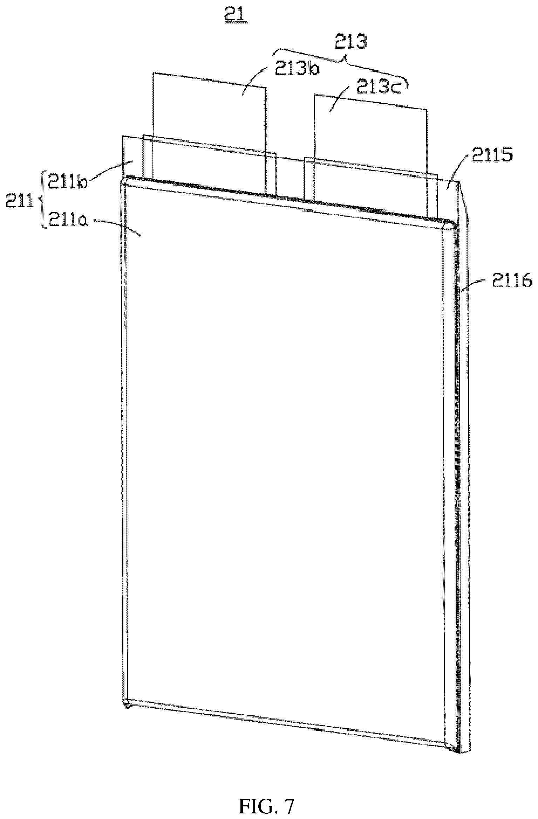

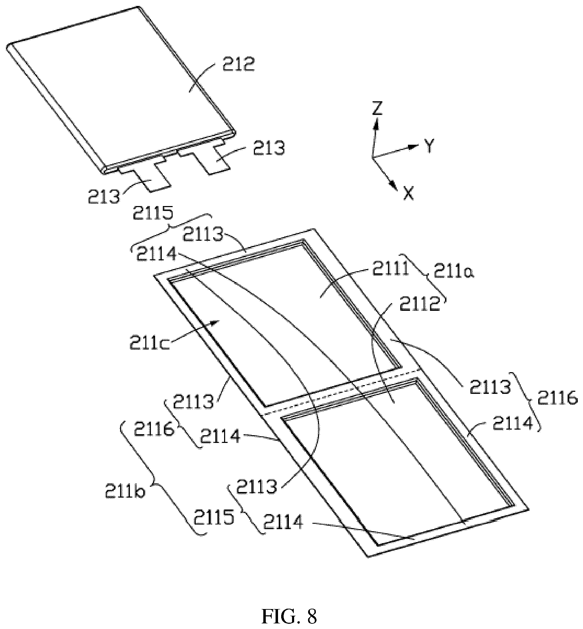

Refer to FIG. 4, FIG. 7, and FIG. 8. In an embodiment, the cell housing 211 includes a first part 211a and a second part 211b. The first part 211a is used for accommodating the electrode assembly 212, the second part 211b is connected to the first part 211a, and the electrode terminal 213 extends out of the second part 211b. Optionally, the first connection member 70 is disposed between the heat sink 60 and the cell housing 211, and the first connection member 70 covers the first circuit board 30, the support 40, and the part of the electrode terminal 213 located outside the cell housing 211.

In an embodiment, the cell housing 211 includes a first casing 2111 and a second casing 2112, and the first casing 2111 is connected to the second casing 2112. At least one of the first casing 2111 and the second casing 2112 is provided with a first recess 211c, and the electrode assembly 212 is disposed in the first recess 211c. The first casing 2111 and the second casing 2112 can be folded along a connection position, so that the first casing 2111 and the second casing 2112 coincide to form the first part 211a so as to cover the electrode assembly 212. A peripheral side of the first casing 2111 extends outward to form a plurality of first extension portions 2113, and a peripheral side of the second casing 2112 extends outward to form a plurality of second extension portions 2114. After the first casing 2111 and the second casing 2112 are folded along the connection position, the first extension portion 2113 and the second extension portion 2114 coincide and are hermetically connected to form the second part 211b. Optionally, the first extension portion 2113 and the second extension portion 2114 are hermetically connected by a sealant. The second part 211b includes a first sealing portion 2115 and a second sealing portion 2116. The first sealing portion 2115 is disposed opposite to the connection position, and the electrode terminal 213 extends out of the first part 211a from the first sealing portion 2115. Optionally, the second part 211b includes two second sealing portions 2116, and the two second sealing portions 2116 are disposed opposite to each other in the second direction Y. Optionally, the second part 211b includes one first sealing portion 2115, the cell 21 includes two electrode terminals 213, and the two electrode terminals 213 extend from the first sealing portion 2115 out of the cell housing 211. In another embodiment, the first casing 2111 and the second casing 2112 are separated. The second part 211b includes two first sealing portions 2115, where the two first sealing portions 2115 are disposed opposite to each other in the first direction X. The cell 21 includes two electrode terminals 213, where one electrode terminal 213 extends out of the cell housing 211 from one first sealing portion 2115, and the other electrode terminal 213 extends out of the cell housing 211 from the other first sealing portion 2115. The two electrode terminals 213 are disposed opposite to each other in the first direction X.

In an embodiment, the first connection member 70 covers a part of the electrode terminal 213 extending out of the cell housing 211 to strengthen fixation of the electrode terminal 213 and improve heat dissipation of the electrode terminal 213.

In an embodiment, the first connection member 70 covers the part of the electrode terminal 213 extending out of the cell housing 211 and at least a part of the first sealing portion 2115 to strengthen protection of first sealing portion 2115 and improve heat dissipation of the cell housing 211.

In an embodiment, the electrode assembly 212 includes a wound structure formed by winding a positive electrode plate, a negative electrode plate, and a separator. In some other embodiments, the electrode assembly 212 may alternatively be a laminated structure. To be specific, a positive electrode plate, a separator, and a negative electrode plate are sequentially laminated to form an electrode assembly unit, and a plurality of electrode assembly units are then laminated to form an electrode assembly 212. Optionally, the cell housing 211 includes an aluminum-plastic film. Optionally, the cell 21 includes a pouch cell.

In an embodiment, the electrode terminal 213 is provided with a welding portion 213a extending out of the cell housing 211, where the welding portion 213a is formed by the electrode terminal 213 through bending. Electrode terminals 213 of adjacent cells 21 are bent toward each other by running through the first circuit board 30, and are connected to the first circuit board 30. In an embodiment, the electrode terminal 213 includes a first terminal 213b and a second terminal 213c, and the first terminal 213b and the second terminal 213c have opposite polarities. One of the first terminal 213b and the second terminal 213c is a positive terminal and the other is a negative terminal. In the first direction X, a projection of the welding portion 213a of the first terminal 213b of the cell 21 at least partially overlaps a projection of the welding portion 213a of the second terminal 213c of the adjacent cell 21. The first terminal 213b and the second terminal 213c of the adjacent cells 21 are bent toward each other, and the welding portion 213a of the first terminal 213b and the welding portion 213a of the second terminal 213c are stacked and connected to each other. The welding portions 213a of the adjacent cells 21 are connected to each other, and the welding portions 213a are connected to the first circuit board 30, thereby reducing processing steps.

In another embodiment, in the first direction X, a projection of the first terminal 213b of the cell 21 and a projection of the first terminal 213b of the adjacent cell 21 may alternatively at least partially overlap, and the two first terminals are connected by the first circuit board 30, so as to realize a parallel connection between the cells 21.

In an embodiment, the cell assembly 20 includes a plurality of cells 21 stacked in the third direction Z. Optionally, the cell assembly 20 includes a plurality of cells 21, where some cells 21 are stacked in the third direction Z to form a first column of cells 21a, some cells 21 are stacked in the third direction Z to form a second column of cells 21b, and the second column of cells 21b and the first column of cells 21a are arranged in the second direction Y.

In an embodiment, the cell assembly 20 includes a plurality of cells 21, and the plurality of cells 21 are stacked in the third direction Z.

In an embodiment, the cell 21 is in contact connection with the first housing 11 to dissipate heat of the cell 21 to the external environment through the first housing 11.

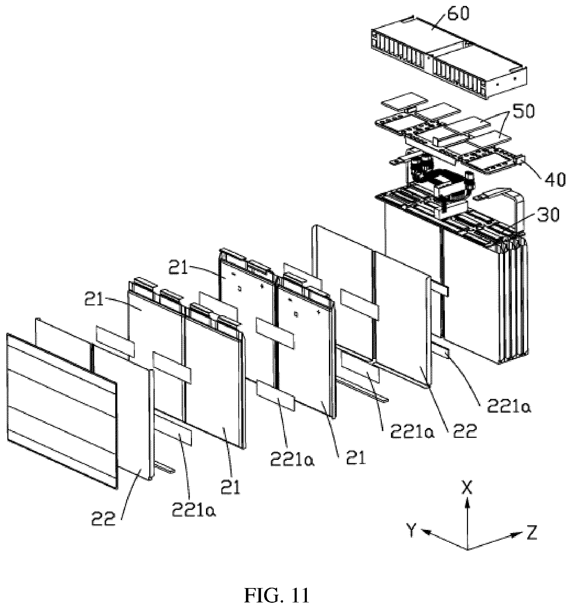

Refer to FIG. 11. In an embodiment, the cell assembly 20 further includes a plurality of heat dissipation portions 22, and the heat dissipation portions 22 are in contact connection with the cells 21 to dissipate heat of the cells 21. Optionally, the heat dissipation portion 22 is in contact connection with the first housing 11 to transfer heat of the cell 21 to the first housing 11, to dissipate heat of the cell 21 through the first housing 11. Optionally, the heat dissipation portion 22 includes an aluminum casing.

In an embodiment, a projection of the heat dissipation portion 22 and a projection of the cell housing 211 overlap in the first direction X, a projection of the heat dissipation portion 22 and a projection of the cell housing 211 overlap in the second direction Y, and a projection of the heat dissipation portion 22 and a projection of the cell housing 211 overlap in the third direction Z. This increases a contact area between the heat dissipation portion 22 and the cell housing 211 and improves heat dissipation efficiency.

In an embodiment, a first elastic member 221a is disposed between adjacent heat dissipation portions 22, and there is a gap between adjacent cells 21, which can increase a width between the adjacent cells 21 in the third direction Z, facilitate injection of the first connection member 70, and improve injection efficiency of the first connection member 70. Optionally, the first elastic member 221a includes foam.

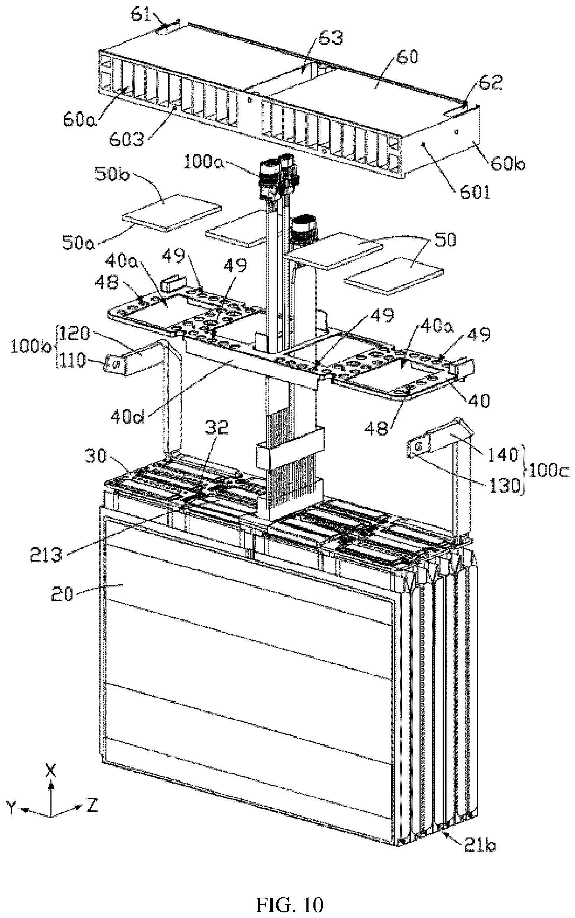

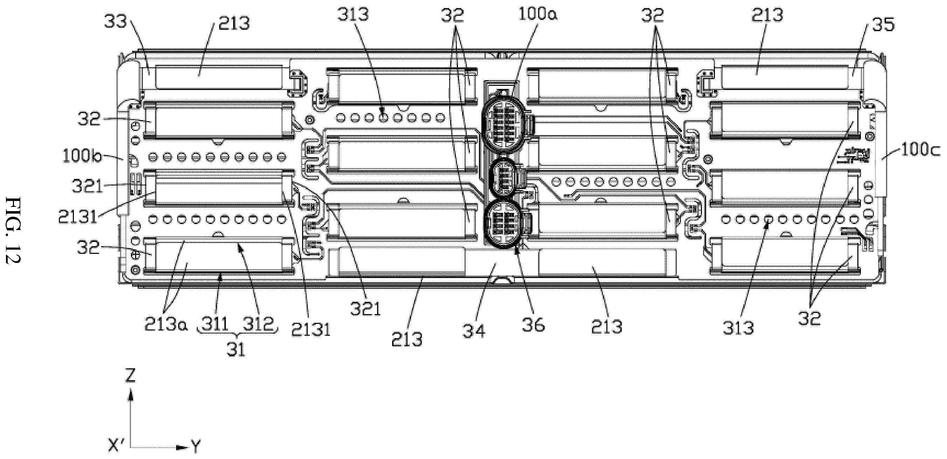

Refer to FIG. 10 and FIG. 12. In an embodiment, the first circuit board 30 is provided with a plurality of groups of holes 31, and each group of holes 31 includes a first hole 311 and a second hole 312 disposed in the third direction Z. A first terminal 213b of one of adjacent cells 21 runs through the first hole 311, and a second terminal 213c of the other cell 21 runs through the second hole 312. A welding portion 213a of the first terminal 213b and a welding portion 213a of the second terminal 213c are stacked and connected to the first circuit board 30. Optionally, the first circuit board 30 includes a flexible printed circuit (FPC, Flexible Printed Circuit) board. Optionally, the first circuit board 30 includes a printed circuit board (PCB, Printed Circuit Board). The first circuit board 30 may collect information of the electrode terminal 213 and transmit the information to the second circuit board 13, such as voltage, current and other information.

In an embodiment, the first circuit board 30 is provided with a plurality of first conductive sheets 32, and the first conductive sheets 32 are connected to the first circuit board 30. Optionally, the first conductive sheet 32 may be a copper foil disposed on the first circuit board 30, and the copper foil is connected to wiring on the first circuit board 30. Optionally, the first conductive sheet 32 may be a conductive sheet disposed on the first circuit board 30, such as a copper bar, where the conductive sheet is welded to the first circuit board 30. Viewed in a direction X' opposite to the first direction, the first conductive sheet 32 is located between the first hole 311 and the second hole 312, a first terminal 213b of one of adjacent cells 21 runs through the first hole 311, and a second terminal 213c of the other cell 21 runs through the second hole 312. A welding portion 213a of the first terminal 213b and a welding portion 213a of the second terminal 213c are stacked and welded to the first conductive sheet 32. The first conductive sheet 32, the welding portion 213a of the first terminal 213b, and the welding portion 213a of the second terminal 213c are stacked in the first direction X, and the thermally conductive member 50 is connected to a side of the welding portion 213a facing away from the first conductive sheet 32. Welding includes laser welding, ultrasonic welding, and the like. In other embodiments, the welding portion 213a and the first conductive sheet 32 may alternatively be connected by other means such as a conductive adhesive.

In an embodiment, each welding portion 213a includes two first ends 2131 disposed in the second direction Y, and each first conductive sheet 32 includes a second end 321 disposed in the second direction Y. In the second direction Y, the two first ends 2131 are located between the two second ends 321 when viewed in the direction X' opposite to the first direction X.

In an embodiment, each group of holes 31 further includes a third hole 313, where the third hole 313 runs through the first circuit board 30 in the first direction X. Some of the third holes 313 are arranged in the second direction Y, and some of the third holes 313 are arranged in the third direction Z. Optionally, at least one third hole 313 is configured to allow the first connection member 70 to flow between the thermally conductive member 50 and the first circuit board 30, and at least a part of the first connection member 70 is located in the at least one third hole 313. Optionally, all third holes 313 are configured to allow the first connection member 70 to flow between the thermally conductive member 50 and the first circuit board 30, and at least a part of the first connection member 70 is disposed in the third holes 313, thereby improving heat dissipation.

In an embodiment, when viewed in the direction X' opposite to the first direction X, the third hole 313 is located in the first opening 40a, and the third hole 313 is separated from the first conductive sheet 32, thereby further improving heat dissipation.

In an embodiment, the first circuit board 30 is further provided with a second conductive sheet 33 and a third conductive sheet 34. In the third direction Z, an electrode terminal 213 of one of two outermost cells 21 in the first column of cells 21a is connected to the third conductive sheet 34, and an electrode terminal 213 of the other cell 21 in the two outermost cells 21 is connected to the second conductive sheet 33.

In an embodiment, the first circuit board 30 is further provided with a fourth conductive sheet 35. In the third direction Z, an electrode terminal 213 of one of two outermost cells 21 in the second column of cells 21b is connected to the third conductive sheet 34, and an electrode terminal 213 of the other cell 21 in the two outermost cells 21 is connected to the fourth conductive sheet 35. The third conductive sheet 34 is connected to the electrode terminals 213 of the two cells 21 arranged in the second direction Y, and is configured to transfer current from the first column of cells 21a to the second column of cells 21b, so as to realize series connection or parallel connection between the first column of cells 21a and the second column of cells 21b. Optionally, in the first direction X, a thickness of the second conductive sheet 33, a thickness of the third conductive sheet 34, and a thickness of the fourth conductive sheet 35 are all greater than a thickness of the first conductive sheet 32. Current transmission can be improved by increasing the thicknesses of the second conductive sheet 33, the third conductive sheet 34, and the fourth conductive sheet 35.

In an embodiment, the first circuit board 30 is further provided with a plurality of fourth holes 36, and the fourth holes 36 are disposed in the middle of the first circuit board 30 in the second direction Y. The battery pack 100 further includes a sampling wire harness 100a, and the sampling wire harness 100a is connected to the first circuit board 30 through the plurality of fourth holes 36.

In an embodiment, the battery pack 100 further includes a first electrical connection portion 100b and a second electrical connection portion 100c. The first electrical connection portion 100b and the second electrical connection portion 100c are for electricity input or output. Optionally, the first electrical connection portion 100b and the second electrical connection portion 100c are welded to the first circuit board 30. Optionally, the first electrical connection portion 100b is connected to one of the first terminal 213b and the second terminal 213c, and the second electrical connection portion 100c is connected to the other terminal. Optionally, the first electrical connection portion 100b and the second electrical connection portion 100c include a copper bar.

In an embodiment, the first electrical connection portion 100b includes a first conductive portion 110 and a first insulation portion 120. The first insulation portion 120 is sleeved on the first conductive portion 110, and both ends of the first conductive portion 110 extend out of the first insulation portion 120. Optionally, one end of the first conductive portion 110 extending out of the first insulation portion 120 is connected to the second conductive sheet 33, and another end runs through the support 40 and the heat sink 60 and is connected to the first connection portion 131 of the second circuit board 13. Optionally, one end of the first conductive portion 110 extending out of the first insulation portion 120 is directly connected to the first circuit board 30, and another end runs through the support 40 and the heat sink 60 and is connected to the first connection portion 131 of the second circuit board 13.

In an embodiment, the second electrical connection portion 100c includes a second conductive portion 130 and a second insulation portion 140. The second insulation portion 140 is sleeved on the second conductive portion 130, and both ends of the second conductive portion 130 extend out of the second insulation portion 140. Optionally, one end of the second conductive portion 130 extending out of the second insulation portion 140 is connected to the fourth conductive sheet 35, and another end runs through the support 40 and the heat sink 60 and is connected to the first connection portion 131 of the second circuit board 13. Optionally, one end of the second conductive portion 130 extending out of the second insulation portion 140 is directly connected to the first circuit board 30, and another end runs through the support 40 and the heat sink 60 and is connected to the second connection portion 132 of the second circuit board 13.

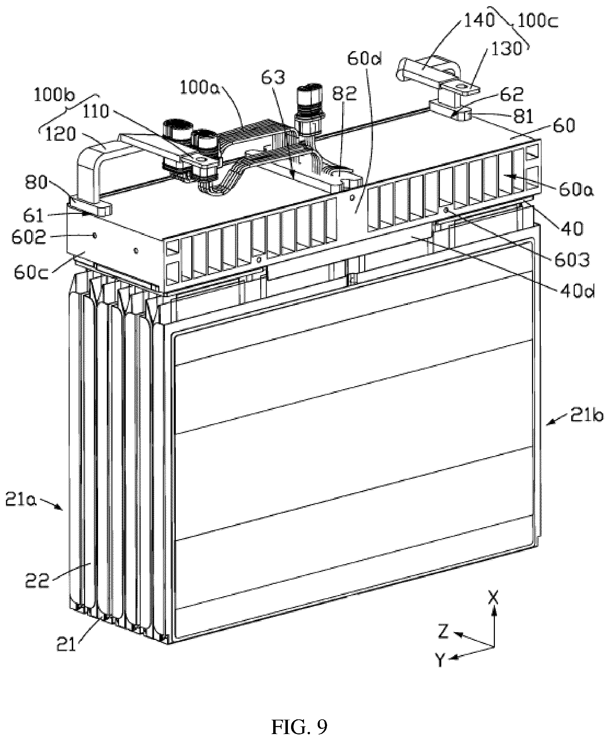

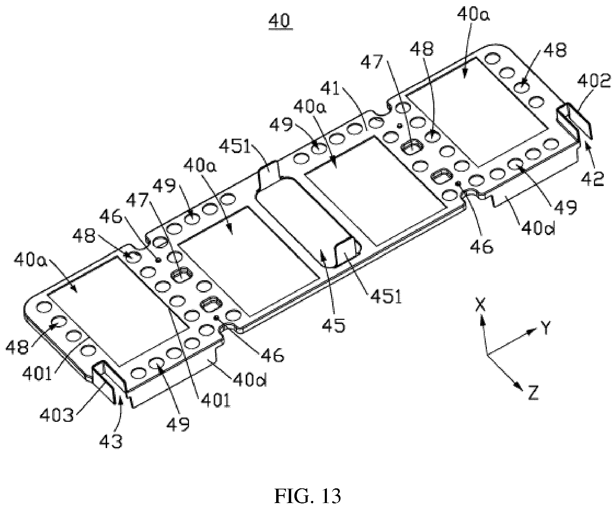

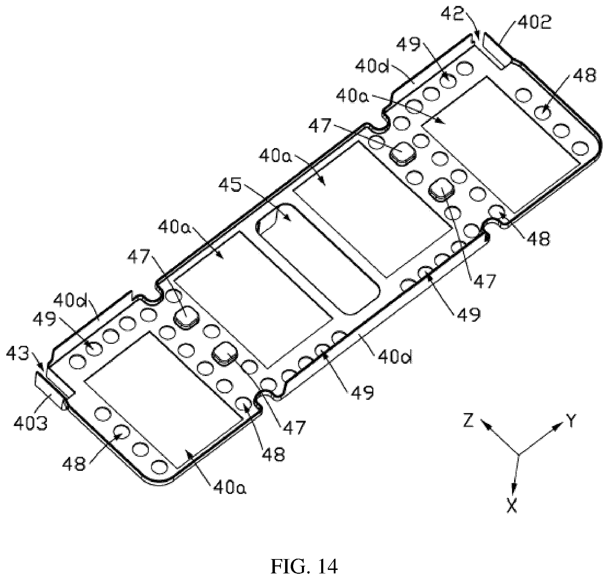

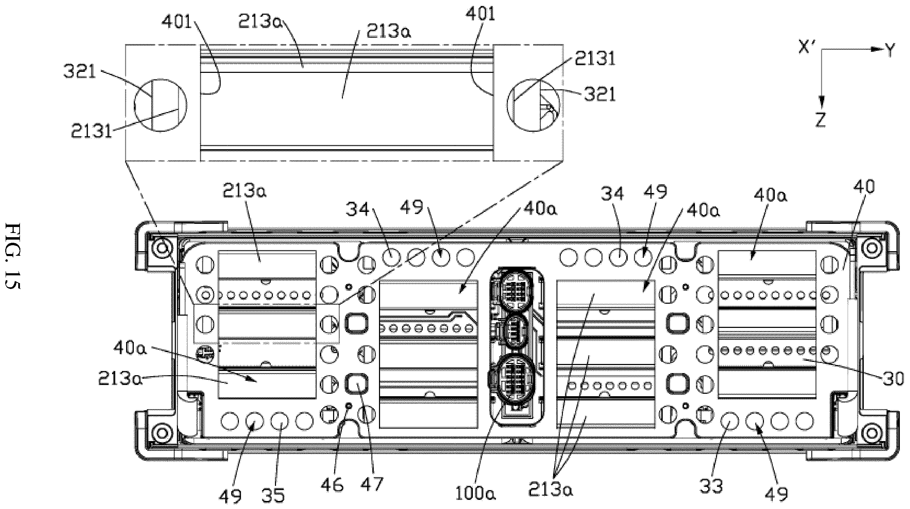

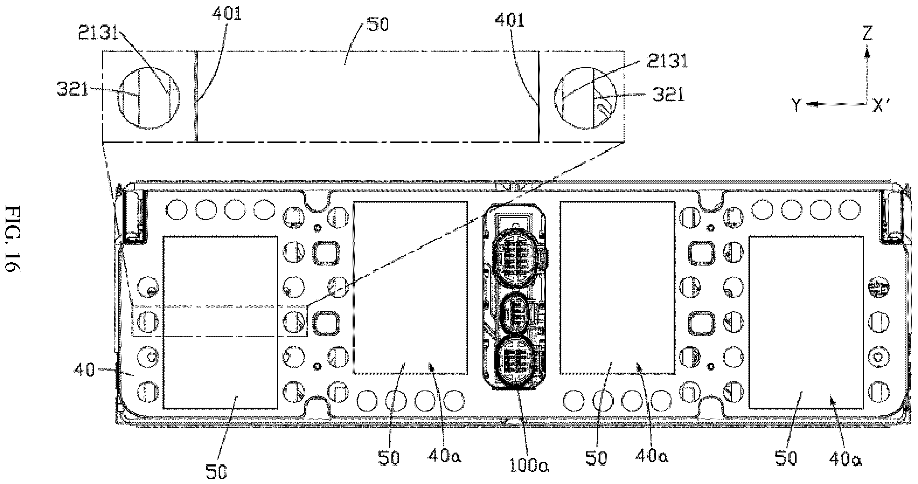

Refer to FIG. 9, FIG. 10, and FIG. 13 to FIG. 16. In an embodiment, the support 40 includes a support body 41, where the support body 41 covers a part of the first circuit board 30, insulating the first circuit board 30. The first connection member 70 is disposed between the support body 41 and the first circuit board 30, and the support 40 and the first circuit board 30 are connected by the first connection member 70. The first connection member 70 can further insulate the first circuit board 30.

Optionally, the support 40 is made of an insulation material. Optionally, the support 40 is made of a metal material and an insulation material, and the insulation material can cover an outer surface of the metal material.

In an embodiment, in the first direction X, the first opening 40a runs through the support body 41. When viewed in the direction X' opposite to the first direction X, at least a part of the welding portion 213a is exposed from the first opening 40a. The thermally conductive member 50 is disposed in the first opening 40a, and a projection of the thermally conductive member 50 coincides with a projection of the first opening 40a in the first direction X, and is connected to the welding portion 213a exposed from the first opening 40a. In the first direction X, the first conductive sheet 32, the welding portion 213a, and the thermally conductive member 50 are connected in sequence. Optionally, the thermally conductive member 50 covers the welding portion 213a exposed from the first opening 40a.

Optionally, at least some of welding portions 213a on a plurality of first conductive sheets 32 spaced apart in the third direction Z are exposed from a same first opening 40a when viewed in the direction X' opposite to the first direction X. In the first direction X, the thermally conductive member 50 coincides with the first opening 40a and is connected to a plurality of welding portions 213a exposed from the first opening 40a.

Optionally, the support body 41 is provided with a plurality of first openings 40a, and the plurality of first openings 40a are spaced apart in the second direction Y. Each first opening 40a is internally provided with a thermally conductive member 50, and each thermally conductive member 50 is connected to a side of the welding portion 213a facing away from the first conductive sheet 32.

In an embodiment, in the second direction Y, the first opening 40a includes two first edges 401. When viewed in the direction X' opposite to the first direction X, in the second direction Y, the two first edges 401 are located between the two first ends 2131, and a side end of the welding portion 213a is away from the first opening 40a, which reduces the possibility that burrs of the welding portion 213a pierce the thermally conductive member 50. When viewed in the direction X' opposite to the first direction X, in the second direction Y, the two first edges 401 are located between the two second ends 321, and a side end of the first conductive sheet 32 is away from the first opening 40a, reducing the possibility that burrs of the first conductive sheet 32 pierce the thermally conductive member 50.

In an embodiment, the thermally conductive member 50 includes a first surface 50a and a second surface 50b disposed opposite to each other in the first direction X. The first surface 50a protrudes from the first opening 40a in the direction opposite to the first direction X, which facilitates connection of the first surface 50a with the welding portion 213a. The second surface 50b protrudes from the first opening 40a in the first direction X, which facilitates connection of the second surface 50b with the heat sink 60. The heat of the electrode terminal 213 is conducted to the second surface 50b through the first surface 50a, and then is conducted to the heat sink 60 through the second surface 50b, which facilitates conduction of the heat of the electrode terminal 213. Optionally, the first surface 50a is in contact connection with the electrode terminal 213, and the second surface 50b is in contact connection with the heat sink 60. Optionally, the first surface 50a is connected to the electrode terminal 213 through a thermally conductive adhesive, and the second surface 50b is connected to the heat sink 60 through a thermally conductive adhesive. Optionally, the thermally conductive member 50 includes a thermally conductive silica gel pad. Optionally, the thermally conductive member 50 may be compressed, and the thermally conductive member 50 is in a compressed state, which is conducive to further improving heat dissipation.

Optionally, thermal conductivity of the thermally conductive member 50 is higher than thermal conductivity of the first connection member 70, improving a thermally conductive effect of the thermally conductive member 50. The thermal conductivity of the thermally conductive member 50 is D, where 4 W/(mK) ≤ D ≤ 6 W/(mK). The thermal conductivity D satisfies any one of 4 W/(mK), 4.1 W/(mK), 4.2 W/(mK), 4.3 W/(mK), 4.4 W/(mK), 4.5 W/(mK), 4.6 W/(mK), 4.7 W/(mK), 4.8 W/(mK), 4.9 W/(mK), 5.0 W/(mK), 5.1 W/(mK), 5.2 W/(mK), 5.3 W/(mK), 5.4 W/(mK), 5.5 W/(mK), 5.6 W/(mK), 5.7 W/(mK), 5.8 W/(mK), 5.9 W/(mK), or 6.0 W/(mK).

In an embodiment, the support 40 is provided with a second opening 42, and the second opening 42 runs through the support body 41 in the first direction X. The first electrical connection portion 100b runs through the second opening 42 and extends to a side of the support 40 away from the first circuit board 30. Optionally, the support 40 is provided with a first bulge 402, and the first bulge 402 is disposed at an edge of the second opening 42. The first electrical connection portion 100b is positioned by using the first bulge 402. In the second direction Y, a projection of a part of the first conductive portion 110 extending out of the first insulation portion 120 falls within a projection of the first bulge 402. The first bulge 402 insulates the part of the first conductive portion 110 extending out of the first insulation portion 120, thereby reducing a risk of short circuit in the part of the first conductive portion 110 extending out of the first insulation portion 120. Optionally, in the second direction Y, a projection of the first insulation portion 120 overlaps a projection of the first bulge 402, so as to increase a length of the first bulge 402 in the first direction X, thereby further improving insulation of the part of the first conductive portion 110 extending out of the first insulation portion 120.

In an embodiment, the support 40 is provided with a third opening 43, and the third opening 43 runs through the support body 41 in the first direction X. The second electrical connection portion 100c runs through the third opening 43 and extends to a side of the support 40 away from the first circuit board 30. Optionally, the support 40 is provided with a second bulge 403, and the second bulge 403 is disposed at an edge of the third opening 43. The second electrical connection portion 100c is positioned and insulated by using the second bulge 403. In the second direction Y, a projection of a part of the second conductive portion 130 extending out of the second insulation portion 140 falls within a projection of the second bulge 403. The second bulge 403 insulates the part of the second conductive portion 130 extending out of the second insulation portion 140, thereby reducing a risk of short circuit in the part of the second conductive portion 130 extending out of the second insulation portion 140. Optionally, in the second direction Y, a projection of the second insulation portion 140 overlaps a projection of the second bulge 403, so as to increase a length of the second bulge 403 in the first direction X, thereby further improving insulation of the part of the second conductive portion 130 extending out of the second insulation portion 140.

In an embodiment, the support 40 is provided with a fourth opening 45. The fourth opening 45 runs through the support body 41 in the first direction X, so that the sampling wire harness 100a can pass through the fourth opening 45. In the second direction Y, the fourth opening 45 is located in the middle of the support body 41. In the third direction Z, guide plates 451 are disposed on both sides of the fourth opening 45, and the sampling wire harness 100a runs through the fourth opening 45 between the two guide plates 451, facilitating positioning and guiding of the sampling wire harness 100a.

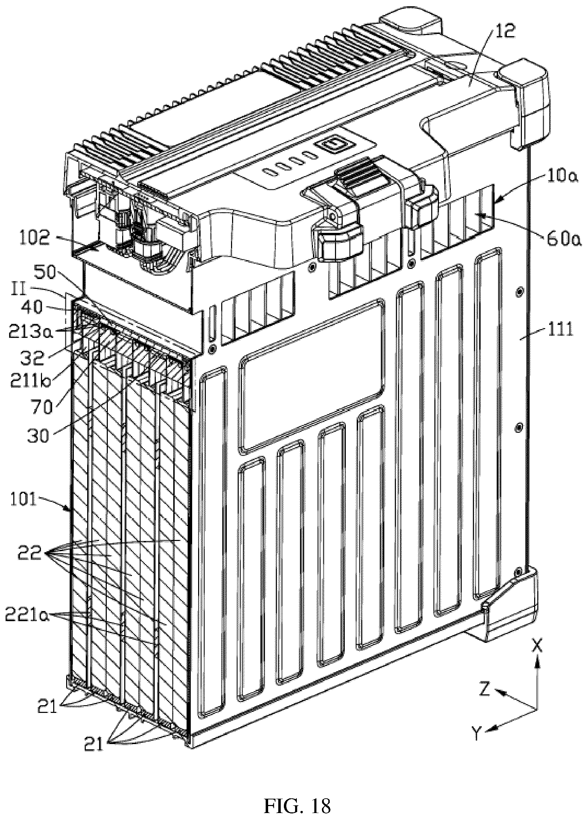

Refer to FIG. 3, FIG. 13, FIG. 14, and FIG. 18 to FIG. 20. In an embodiment, the support 40 includes a first convex part 46. In the first direction X, the first convex part 46 is disposed on a side of the support body 41 facing the heat sink 60, and the first convex part 46 is connected to the heat sink 60, so that a first gap 40b is provided between the support body 41 and the heat sink 60. The first connection member 70 is disposed in the first gap 40b to connect the support 40 and the heat sink 60, and to seal and insulate a space between the support 40 and the heat sink 60.

In an embodiment, the support 40 includes a second convex part 47. In the direction opposite to the first direction X, the second convex part 47 is disposed on a side of the support body 41 facing the first circuit board 30, and the second convex part 47 is connected to the first circuit board 30, so that a second gap 40c is provided between the support body 41 and the first circuit board 30. The first connection member 70 is disposed in the second gap 40c to connect the support 40 and the second gap 40c, and to seal and insulate a space between the support 40 and the second gap 40c.

In an embodiment, the support 40 includes a first through hole 48, and the first through hole 48 runs through the support body 41 in the first direction X. The first through hole 48 is configured to allow the first connection member 70 to flow into the first gap 40b, and at least a part of the first connection member 70 is disposed in the first through hole 48. Optionally, a plurality of first through holes 48 are provided, and the plurality of first through holes 48 are disposed in the third direction Z, which is conducive to improving injection efficiency of the first connection member 70. Optionally, at least one first through hole 48 is configured to allow the first connection member 70 to flow into the first gap 40b, and the first connection member 70 is disposed in the at least one first through hole 48. Optionally, the plurality of first through holes 48 are configured to allow the first connection member 70 to flow into the first gap 40b, and at least a part of the first connection member 70 is disposed in the plurality of first through holes 48.

In an embodiment, a part of at least one electrode terminal 213 is located in at least one first through hole 48 when viewed in the direction X' opposite to the first direction X, further improving heat dissipation of the electrode terminal 213.

In an embodiment, a part of at least one first conductive sheet 32 is located in at least one first through hole 48 when viewed in the direction X' opposite to the first direction X, further improving heat dissipation of the first conductive sheet 32.

In an embodiment, the support 40 includes a plurality of second through holes 49, and the plurality of second through holes 49 runs through the support body 41 in the first direction X. Optionally, at least one second through hole 49 is internally provided with the first connection member 70. Optionally, a plurality of second through holes 49 are internally provided with the first connection member 70.

Optionally, in the first direction X, a projection of the second through hole 49 overlaps a projection of the second conductive sheet 33. To be specific, when viewed in the direction X' opposite to the first direction X, a part of the second conductive sheet 33 is located in the second through hole 49, and the projection of the second through hole 49 overlaps a projection of a welding portion 213a of the electrode terminal 213 connected to the second conductive sheet 33. In other words, when viewed in the direction X' opposite to the first direction X, a part of the welding portion 213a connected to the second conductive sheet 33 is located in the second through hole 49. Heat of the electrode terminal 213 connected to the second conductive sheet 33 and heat of the second conductive sheet 33 are conducted to the heat sink 60 through the first connection member 70 in the second through hole 49, which facilitates heat dissipation.

Optionally, in the first direction X, a projection of the second through hole 49 overlaps a projection of the third conductive sheet 34. To be specific, when viewed in the direction X' opposite to the first direction X, a part of the third conductive sheet 34 is located in the second through hole 49, and the projection of the second through hole 49 overlaps a projection of a welding portion 213a of the electrode terminal 213 connected to the third conductive sheet 34. In other words, when viewed in the direction X' opposite to the first direction X, a part of the welding portion 213a connected to the third conductive sheet 34 is located in the second through hole 49. Heat of the electrode terminal 213 connected to the third conductive sheet 34 and heat of the third conductive sheet 34 are conducted to the heat sink 60 through the first connection member 70 in the second through hole 49, which facilitates heat dissipation.

Optionally, in the first direction X, a projection of the second through hole 49 overlaps a projection of the fourth conductive sheet 35. To be specific, when viewed in the direction X' opposite to the first direction X, a part of the fourth conductive sheet 35 is located in the second through hole 49, and the projection of the second through hole 49 overlaps a projection of a welding portion 213a of the electrode terminal 213 connected to the fourth conductive sheet 35. In other words, when viewed in the direction X' opposite to the first direction X, a part of the welding portion 213a connected to the fourth conductive sheet 35 is located in the second through hole 49. Heat of the electrode terminal 213 connected to the fourth conductive sheet 35 and heat of the fourth conductive sheet 35 are conducted to the heat sink 60 through the first connection member 70 in the second through hole 49, which facilitates heat dissipation.

In an embodiment, the support 40 includes a third convex part 40d. The support body 41 includes a first side 411 and a second side 412 disposed in the third direction Z. Optionally, the first side 411 is provided with the third convex part 40d. In the third direction Z, a projection of the third convex part 40d overlaps a projection of the first circuit board 30, and a position at which the support 40 is connected to the first circuit board 30 is limited by the third convex part 40d, facilitating assembly. Optionally, in the third direction Z, a projection of the first circuit board 30 falls within a projection of the third convex part 40d. Optionally, in the third direction Z, a projection of the third convex part 40d overlaps projections of the cell housing 211 and the electrode terminal 213, so that the electrode terminal 213 can be insulated. Optionally, in the third direction Z, a projection of the welding portion 213a falls within a projection of the third convex part 40d, further strengthening insulation.

Optionally, the second side 412 is provided with a third convex part 40d In the third direction Z, a projection of the third convex part 40d overlaps a projection of the first circuit board 30, and a position at which the support 40 is connected to the first circuit board 30 is further limited by the third convex part 40d, facilitating assembly. Optionally, in the third direction Z, a projection of the first circuit board 30 falls within a projection of the third convex part 40d. Optionally, in the third direction Z, a projection of the third convex part 40d overlaps projections of the cell housing 211 and the electrode terminal 213, so that the electrode terminal 213 can be further insulated. Optionally, in the third direction Z, a projection of the welding portion 213a falls within a projection of the third convex part 40d, further strengthening insulation.

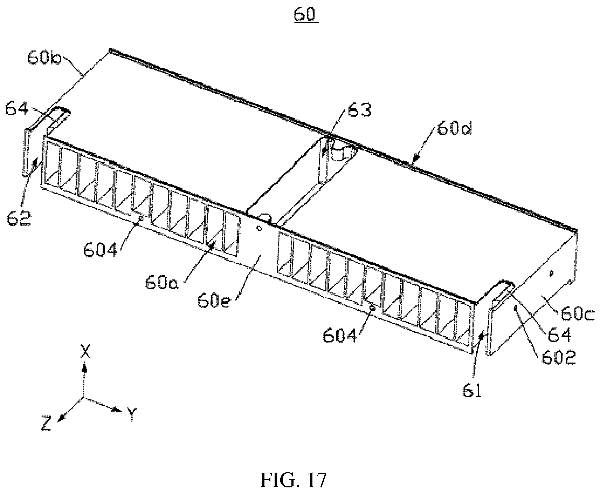

Refer to FIG. 3, FIG. 9, FIG. 10, and FIG. 17. In an embodiment, the heat sink 60 has a plurality of first channels 60a, and the plurality of first channels 60a are arranged in the second direction Y. The heat sink 60 is provided with a first accommodation space 61. Optionally, one of two outermost first channels 60a provided in the second direction Y communicates with the first accommodation space 61. Optionally, the heat sink 60 is provided with a second accommodation space 62, and the second accommodation space 62 communicates with the other outermost first channel 60a.

In an embodiment, thermal conductivity of the heat sink 60 is higher than that of the thermally conductive member 50, which is conducive to improving heat dissipation of the battery pack 100.

In an embodiment, when the support 40 is connected to the heat sink 60, the first bulge 402 is disposed in the first accommodation space 61. In the first direction X, a projection of the first bulge 402 falls within a projection of the first accommodation space 61. The first electrical connection portion 100b runs through the first accommodation space 61. Optionally, the heat sink 60 is provided with a third accommodation space 63, and the sampling wire harness 100a runs through the third accommodation space 63.

In an embodiment, a second insulation member 80 is disposed in the first accommodation space 61 to seal the first accommodation space 61. The first insulation material can be restricted from flowing out of the first accommodation space 61 when the first insulation material is injected. Optionally, the second insulation member 80 is configured to be formed by providing a curable second insulation material in the first accommodation space 61 and curing the second insulation material. Optionally, the second insulation member 80 includes one of a polyurethane adhesive, an epoxy adhesive, and silica gel. Optionally, the second insulation member 80 includes a foam adhesive. The first bulge 402 is disposed in the first accommodation space 61, which can further restrict flowing of the second insulation material and reduce the second insulation material flowing between the support 40 and the first circuit board 30 through the second opening 42. In the first direction X, the second insulation member 80 protrudes from the heat sink 60.

In an embodiment, a third insulation member 81 is disposed in the second accommodation space 62 to seal the second accommodation space 62. The first insulation material can be restricted from flowing out of the second accommodation space 62 when the first insulation material is injected. Optionally, the third insulation member 81 is configured to be formed by fixing a curable third insulation material in the second accommodation space 62 and curing the third insulation material. Optionally, the third insulation member 81 includes one of a polyurethane adhesive, an epoxy adhesive, and silica gel. Optionally, the third insulation member 81 includes a foam adhesive. The second bulge 403 is disposed in the second accommodation space 62, which can further restrict flowing of the third insulation material and reduce the third insulation material flowing between the support 40 and the first circuit board 30 through the third opening 43. In the first direction X, the third insulation member 81 protrudes from the heat sink 60.

In an embodiment, a fourth insulation member 82 is disposed in the third accommodation space 63 to seal the third accommodation space 63. The first insulation material can be restricted from flowing out of the third accommodation space 63 when the first insulation material is injected. Optionally, the fourth insulation member 82 is configured to be formed by fixing a curable fourth insulation material in the third accommodation space 63 and curing the fourth insulation material. Optionally, the fourth insulation member 82 includes one of a polyurethane adhesive, an epoxy adhesive, and silica gel. Optionally, the fourth insulation member 82 includes a foam adhesive. In the first direction Z, the fourth insulation member 82 protrudes from the heat sink 60.

In an embodiment, two outermost first channels 60a provided in the second direction Y are provided with a fourth convex part 64, and the fourth convex part 64 is in contact connection with the first bulge 402 to position the first bulge 402, so that the first electrical connection portion 100b can be positioned and a space can be reserved, thereby facilitating injection of the second insulation member 80.

In an embodiment, an outer surface of the heat sink 60 includes a metal material layer, such as aluminum, which is conducive to heat dissipation. Optionally, the heat sink 60 is made of a metal material, and the outer surface of the heat sink 60 may be coated with an insulation layer. Optionally, the heat sink 60 is made of a metal material, and the outer surface of the heat sink 60 includes a metal material layer.

In an embodiment, when pouring the first insulation material upside down, first, the cell 21, the first circuit board 30, the support 40, the thermally conductive member 50, and the heat sink 60 are mounted in the first housing 11, and the heat sink 60 is connected to the first housing 11. Then, the second insulation material is injected into the first accommodation space 61, the third insulation material is injected into the second accommodation space 62, and the fourth insulation material is injected into the third accommodation space 63. After the second insulation material, the third insulation material, and the fourth insulation material are cured, the heat sink 60 is sealed, then the first housing 11 is inverted, so that the flowing first insulation material is injected into the battery pack 100 from the bottom of the cell assembly 20 in the first direction X. After the first insulation material is cured, the first connection member 70 is formed, and then the bottom wall 115 is fixedly connected to the first wall 111, the second wall 112, the third wall 113, and the fourth wall 114.

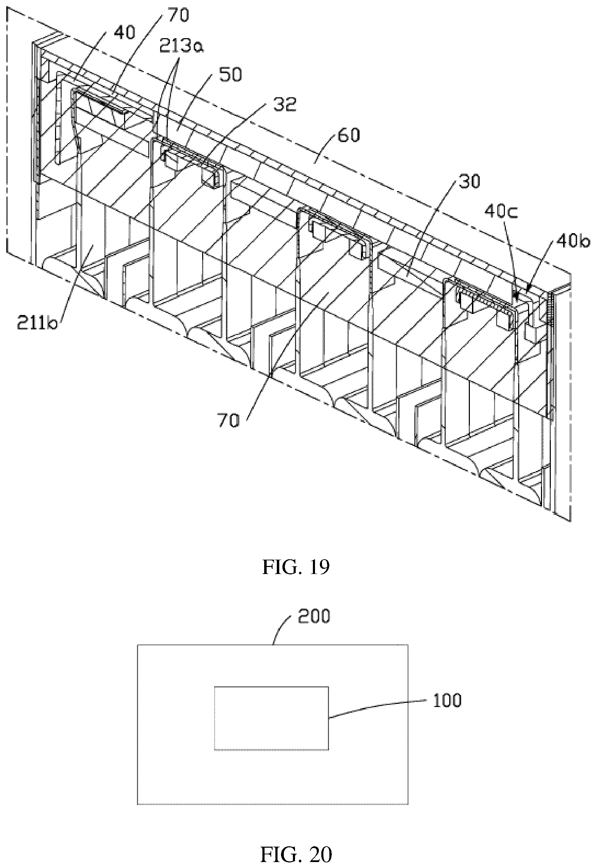

Refer to FIG. 20. This application further provides an electric device 200 using the foregoing battery pack 100. In an embodiment, the electric device 200 in this application may be, but is not limited to, a drone, a backup power source, an electric automobile, an electric motorcycle, an electric motor bicycle, an electric tool, or a large household battery.

Those of ordinary skill in the art should appreciate that the foregoing some embodiments are for description of this application only but not for limiting this application. Appropriate modifications and variations made to the foregoing some embodiments shall not depart from the scope of this application as defined in the appended claims.

## Claims

1. A battery pack (100), comprising:
a housing assembly (10);
a cell assembly (20) accommodated in the housing assembly (10), wherein the cell assembly (20) comprises a plurality of cells (21); each cell (21) comprises a cell housing (211), an electrode assembly (212) disposed in the cell housing (211), and an electrode terminal (213) connected to the electrode assembly (212) and extending out of the cell housing (211);
a first circuit board (30), wherein the electrode terminal (213) runs through the first circuit board (30) and is connected to a side of the first circuit board (30) facing away from the cell housing (211);
a support (40) connected to the first circuit board (30), wherein the first circuit board (30) is disposed between the cell housing (211) and the support (40), and the support (40) is provided with a first opening (40a);
a thermally conductive member (50) having a thermal conductivity ranging from 4 W/(mK) to 6 W/(mK) disposed in the first opening (40a), wherein the thermally conductive member (50) is connected to the electrode terminal (213) of at least one of the plurality of cells; and
**characterized in that** the cell housing (211) and the first circuit board (30) are disposed in a first direction (X), the plurality of cells (21) are stacked in a third direction (Z) perpendicular to the first direction (X);
the battery pack (100) further comprising a heat sink (60), wherein the heat sink (60) is disposed on a side of the support (40), the side of the support (40) being a side facing away from the first circuit board (30);
the thermally conductive member (50) comprises a first surface (50a) and a second surface (50b) disposed opposite to each other in the first direction (X), the first surface (50a) is connected to the electrode terminal of at least some of the plurality of cells through (213) the first opening (40a), and the second surface (50b) is connected to the heat sink (60).

2. The battery pack (100) according to claim 1, wherein the first circuit board (30) is provided with a first conductive sheet (32), electrode terminals (213) of adjacent cells (21) run through the first circuit board (30) and are connected to the first conductive sheet (32) in a stacked manner;
the thermally conductive member (50) is connected to a side of the electrode terminal (213), the side of the electrode terminal (213) being a side facing away from the first conductive sheet (32), and the third direction (Z) is perpendicular to the first direction (X).

3. The battery pack (100) according to claim 2, wherein each electrode terminal (213) connected to the first conductive sheet (32) comprises two first ends (2131) disposed in a second direction (Y), the first opening (40a) comprises two first edges (401) disposed in the second direction (Y);
when viewed in a direction (X') opposite to the first direction (X), the two first edges (401) are located between the two first ends (2131) in the second direction (Y), and the second direction (Y) is perpendicular to the first direction (X).

4. The battery pack (100) according to claim 3, wherein the first conductive sheet (32) comprises two second ends (321) disposed in the second direction (Y), and when viewed in a direction (X') opposite to the first direction (X), the two first ends (2131) are located between the two second ends (321) in the second direction (Y).

5. The battery pack (100) according to any one of claims 1 to 4, wherein the first surface (50a) protrudes from the first opening (40a) in a direction (X') opposite to the first direction (X), and the second surface (50b) protrudes from the first opening (40a) in the first direction (X) and is connected to the heat sink (60).

6. The battery pack (100) according to any one of claims 1 to 5, wherein the housing assembly (10) comprises a first housing (11); the first housing (11) comprises a first wall (111) and a second wall (112) disposed in the third direction (Z), a third wall (113) and a fourth wall (114) disposed in the second direction (Y), and a bottom wall (115); wherein the bottom wall (115) is connected to the first wall (111), the second wall (112), the third wall (113), and the fourth wall (114) to form a first space (101);
the heat sink (60) is disposed in the first space (101); the heat sink (60) is connected to inner surfaces of the first wall (111), the second wall (112), the third wall (113), and the fourth wall (114); and the third direction (Z) is perpendicular to both the first direction (X) and the second direction (Y).

7. The battery pack (100) according to any one of claims 1 to 6, further comprising a first connection member (70), the first connection member (70) is partially disposed between the support (40) and the heat sink (60), and the support (40) and the heat sink (60) are bonded through the first connection member (70).

8. The battery pack (100) according to claim 7, wherein in the first direction (X), a side of the support (40) facing the heat sink (60) is provided with a first convex part (46), the first convex part (46) is connected to the heat sink (60), a first gap (40b) is provided between the support (40) and the heat sink (60), and the first connection member (70) is partially disposed in the first gap (40b).

9. The battery pack (100) according to claim 7 or 8, wherein the first connection member (70) is partially disposed between the first circuit board (30) and the support (40), and the support (40) and the first circuit board (30) are connected by the first connection member (70).

10. The battery pack (100) according to any one of claims 7 to 9, wherein a side of the support (40) facing the first circuit board (30) is provided with a second convex part (47) in the direction (X') opposite to the first direction (X), the second convex part (47) is connected to the first circuit board (30), a second gap (40c) is provided between the support (40) and the first circuit board (30), and the first connection member (70) is partially disposed in the second gap (40c).

11. The battery pack (100) according to any one of claims 7 to 10, wherein the first connection member (70) covers a part of the electrode terminal (213) extending out of the cell housing (211).

12. The battery pack (100) according to any one of claims 7 to 11, wherein the first connection member (70) is configured to be formed by providing a flowing first insulation material in the battery pack (100) and curing the first insulation material.

13. The battery pack (100) according to claim 6, wherein the first housing (11) is provided with a first pore (10a) and a second pore (10b), and the heat sink (60) is provided with a first channel (60a); and the first channel (60a) communicates with the first pore (10a) and the second pore (10b).

14. An electric device (200), comprising the battery pack (100) according to any one of claims 1 to 13.

## Patentansprüche

1. Batteriepack (100), umfassend:
eine Gehäusebaugruppe (10);
eine Zellenbaugruppe (20), die in der Gehäusebaugruppe (10) untergebracht ist, wobei die Zellenbaugruppe (20) eine Vielzahl von Zellen (21) umfasst; wobei jede Zelle (21) ein Zellengehäuse (211), eine Elektrodenbaugruppe (212), die in dem Zellengehäuse (211) angeordnet ist, und einen Elektrodenanschluss (213) umfasst, der mit der Elektrodenbaugruppe (212) verbunden ist und sich aus dem Zellengehäuse (211) erstreckt;
eine erste Leiterplatte (30), wobei der Elektrodenanschluss (213) durch die erste Leiterplatte (30) verläuft und mit einer dem Zellengehäuse (211) abgewandten Seite der ersten Leiterplatte (30) verbunden ist;
einen Träger (40), der mit der ersten Leiterplatte (30) verbunden ist, wobei die erste Leiterplatte (30) zwischen dem Zellengehäuse (211) und dem Träger (40) angeordnet ist, und der Träger (40) mit einer ersten Öffnung (40a) versehen ist;
ein wärmeleitendes Element (50) mit einer Wärmeleitfähigkeit von 4 W/(mk) bis 6 W/(mK), das in der ersten Öffnung (40a) angeordnet ist, wobei das wärmeleitende Element (50) mit dem Elektrodenanschluss (213) von mindestens einer der Vielzahl von Zellen verbunden ist; und
**dadurch gekennzeichnet, dass** das Zellengehäuse (211) und die erste Leiterplatte (30) in einer ersten Richtung (X) angeordnet sind, wobei die Vielzahl von Zellen (21) in einer dritten Richtung (Z) senkrecht zur ersten Richtung (X) gestapelt sind;
wobei das Batteriepack (100) ferner einen Kühlkörper (60) umfasst, wobei der Kühlkörper (60) auf einer Seite des Trägers (40) angeordnet ist, wobei die Seite des Trägers (40) eine der ersten Leiterplatte (30) abgewandte Seite ist;
wobei das wärmeleitende Element (50) eine erste Oberfläche (50a) und eine zweite Oberfläche (50b) umfasst, die in der ersten Richtung (X) einander entgegengesetzt angeordnet sind, wobei die erste Oberfläche (50a) durch die erste Öffnung (40a) mit dem Elektrodenanschluss von mindestens einigen der Vielzahl von Zellen (213) verbunden ist und die zweite Oberfläche (50b) mit dem Kühlkörper (60) verbunden ist.

2. Batteriepack (100) nach Anspruch 1, wobei die erste Leiterplatte (30) mit einer ersten leitfähigen Lage (32) versehen ist, Elektrodenanschlüsse (213) benachbarter Zellen (21) durch die erste Leiterplatte (30) verlaufen und mit der ersten leitfähigen Lage (32) gestapelt verbunden sind;
das wärmeleitende Element (50) mit einer Seite des Elektrodenanschlusses (213) verbunden ist, wobei die Seite des Elektrodenanschlusses (213) eine der ersten leitfähigen Lage (32) abgewandte Seite ist, und die dritte Richtung (Z) senkrecht zur ersten Richtung (X) ist.

3. Batteriepack (100) nach Anspruch 2, wobei jeder mit der ersten leitfähigen Lage (32) verbundene Elektrodenanschluss (213) zwei in einer zweiten Richtung (Y) angeordnete erste Enden (2131) umfasst, wobei die erste Öffnung (40a) zwei in der zweiten Richtung (Y) angeordnete erste Kanten (401) umfasst;
bei Betrachtung in einer der ersten Richtung (X) entgegengesetzten Richtung (X') sich die beiden ersten Kanten (401) zwischen den beiden ersten Enden (2131) in der zweiten Richtung (Y) befinden, und die zweite Richtung (Y) senkrecht zur ersten Richtung (X) ist.

4. Batteriepack (100) nach Anspruch 3, wobei die erste leitfähige Lage (32) zwei zweite Enden (321) umfasst, die in der zweiten Richtung (Y) angeordnet sind, und bei Betrachtung in einer der ersten Richtung (X) entgegengesetzten Richtung (X') sich die beiden ersten Enden (2131) zwischen den beiden zweiten Enden (321) in der zweiten Richtung (Y) befinden.

5. Batteriepack (100) nach einem der Ansprüche 1 bis 4, wobei die erste Oberfläche (50a) aus der ersten Öffnung (40a) in einer der ersten Richtung (X) entgegengesetzten Richtung (X') hervorsteht, und die zweite Oberfläche (50b) aus der ersten Öffnung (40a) in der ersten Richtung (X) hervorsteht und mit dem Kühlkörper (60) verbunden ist.

6. Batteriepack (100) nach einem der Ansprüche 1 bis 5, wobei die Gehäusebaugruppe (10) ein erstes Gehäuse (11) umfasst; das erste Gehäuse (11) eine erste Wand (111) und eine zweite Wand (112), die in der dritten Richtung (Z) angeordnet sind, eine dritte Wand (113) und eine vierte Wand (114), die in der zweiten Richtung (Y) angeordnet sind, und eine Bodenwand (115) umfasst; wobei die Bodenwand (115) mit der ersten Wand (111), der zweiten Wand (112), der dritten Wand (113) und der vierten Wand (114) verbunden ist, um einen ersten Raum (101) zu bilden;
der Kühlkörper (60) in dem ersten Raum (101) angeordnet ist; der Kühlkörper (60) mit Innenflächen der ersten Wand (111), der zweiten Wand (112), der dritten Wand (113) und der vierten Wand (114) verbunden ist; und die dritte Richtung (Z) senkrecht zu sowohl der ersten Richtung (X) als auch der zweiten Richtung (Y) ist.

7. Batteriepack (100) nach einem der Ansprüche 1 bis 6, ferner umfassend ein erstes Verbindungselement (70), wobei das erste Verbindungselement (70) teilweise zwischen dem Träger (40) und dem Kühlkörper (60) angeordnet ist, und der Träger (40) und der Kühlkörper (60) durch das erste Verbindungselement (70) miteinander verbunden sind.

8. Batteriepack (100) nach Anspruch 7, wobei in der ersten Richtung (X) eine dem Kühlkörper (60) zugewandte Seite des Trägers (40) mit einem ersten konvexen Teil (46) versehen ist, das erste konvexe Teil (46) mit dem Kühlkörper (60) verbunden ist, ein erster Spalt (40b) zwischen dem Träger (40) und dem Kühlkörper (60) vorgesehen ist, und das erste Verbindungselement (70) teilweise in dem ersten Spalt (40b) angeordnet ist.

9. Batteriepack (100) nach Anspruch 7 oder 8, wobei das erste Verbindungselement (70) teilweise zwischen der ersten Leiterplatte (30) und dem Träger (40) angeordnet ist, und der Träger (40) und die erste Leiterplatte (30) durch das erste Verbindungselement (70) verbunden sind.

10. Batteriepack (100) nach einem der Ansprüche 7 bis 9, wobei eine der ersten Leiterplatte (30) zugewandte Seite des Trägers (40) mit einem zweiten konvexen Teil (47) in der der ersten Richtung (X) entgegengesetzten Richtung (X') versehen ist, das zweite konvexe Teil (47) mit der ersten Leiterplatte (30) verbunden ist, ein zweiter Spalt (40c) zwischen dem Träger (40) und der ersten Leiterplatte (30) vorgesehen ist, und das erste Verbindungselement (70) teilweise in dem zweiten Spalt (40c) angeordnet ist.

11. Batteriepack (100) nach einem der Ansprüche 7 bis 10, wobei das erste Verbindungselement (70) einen Teil des Elektrodenanschlusses (213) abdeckt, der sich aus dem Zellengehäuse (211) erstreckt.

12. Batteriepack (100) nach einem der Ansprüche 7 bis 11, wobei das erste Verbindungselement (70) so eingerichtet ist, dass es durch Bereitstellen eines fließenden ersten Isolationsmaterials in dem Batteriepack (100) und Aushärten des ersten Isolationsmaterials gebildet wird.

13. Batteriepack (100) nach Anspruch 6, wobei das erste Gehäuse (11) mit einer ersten Pore (10a) und einer zweiten Pore (10b) versehen ist und der Kühlkörper (60) mit einem ersten Kanal (60a) versehen ist; und der erste Kanal (60a) mit der ersten Pore (10a) und der zweiten Pore (10b) in Verbindung steht.

14. Elektrische Vorrichtung (200), umfassend das Batteriepack (100) nach einem der Ansprüche 1 bis 13.

## Revendications

1. Un bloc-batterie (100), comprenant :
une unité de boîtier (10) ;
un ensemble de cellules (20) logé dans l'unité de boîtier (10), l'ensemble de cellules (20) comprenant une pluralité de cellules (21), chaque cellule (21) comprenant un boîtier de cellule (211), un ensemble d'électrodes (212) disposé dans le boîtier de cellule (211), et une borne d'électrode (213) connectée à l'ensemble d'électrodes (212) et s'étendant à l'extérieur du boîtier de cellule (211) ;
une première carte de circuit imprimé (30), la borne d'électrode (213) traversant la première carte de circuit imprimé (30) et étant connectée à un côté de la première carte de circuit imprimé (30) faisant face à l'opposé du boîtier de cellule (211) ;
un support (40) connecté à la première carte de circuit imprimé (30), la première carte de circuit imprimé (30) étant disposée entre le boîtier de cellule (211) et le support (40), le support (40) étant pourvu d'une première ouverture (40a) ;
un élément thermoconducteur (50) ayant une conductivité thermique allant de 4 W/(m·K) à 6 W/(m·K), disposé dans la première ouverture (40a), l'élément thermoconducteur (50) étant connecté à la borne d'électrode (213) d'au moins une des cellules de la pluralité de cellules ;
**caractérisé en ce que** le boîtier de cellule (211) et la première carte de circuit imprimé (30) sont disposés dans une première direction (X), la pluralité de cellules (21) étant empilée dans une troisième direction (Z), perpendiculaire à la première direction (X) ;
le bloc-batterie (100) comprenant en outre un dissipateur thermique (60), le dissipateur thermique (60) étant disposé sur un côté du support (40), ledit côté étant opposé à la première carte de circuit imprimé (30) ;
l'élément thermoconducteur (50) comprenant une première surface (50a) et une seconde surface (50b) disposées l'une en face de l'autre dans la première direction (X), la première surface (50a) étant connectée à la borne d'électrode d'au moins certaines des cellules de la pluralité de cellules (213) via la première ouverture (40a), et la seconde surface (50b) étant connectée au dissipateur thermique (60).

2. Le bloc-batterie (100) selon la revendication 1, dans lequel la première carte de circuit imprimé (30) est pourvue d'une première feuille conductrice (32), les bornes d'électrode (213) de cellules adjacentes (21) traversant la première carte de circuit imprimé (30) et étant connectées à la première feuille conductrice (32) de manière empilée ;
L 'élément thermoconducteur (50) étant connecté à un côté de la borne d'électrode (213), ledit côté étant opposé à la première feuille conductrice (32), et la troisième direction (Z) étant perpendiculaire à la première direction (X).

3. Le bloc-batterie (100) selon la revendication 2, dans lequel chaque borne d'électrode (213) connectée à la première feuille conductrice (32) comprend deux premières extrémités (2131) disposées dans une deuxième direction (Y), la première ouverture (40a) comprenant deux premiers bords (401) disposés dans la deuxième direction (Y) ;
lorsqu'on l'observe selon une direction (X') opposée à la première direction (X), les deux premiers bords (401) sont situés entre les deux premières extrémités (2131) dans la deuxième direction (Y), et la deuxième direction (Y) est perpendiculaire à la première direction (X).

4. Le bloc-batterie (100) selon la revendication 3, dans lequel la première feuille conductrice (32) comprend deux secondes extrémités (321) disposées dans la deuxième direction (Y), et lorsqu'on l'observe selon la direction (X') opposée à la première direction (X), les deux premières extrémités (2131) sont situées entre les deux secondes extrémités (321) dans la deuxième direction (Y).

5. Le bloc-batterie (100) selon l'une quelconque des revendications 1 à 4, dans lequel la première surface (50a) fait saillie de la première ouverture (40a) dans une direction (X') opposée à la première direction (X), et la seconde surface (50b) fait saillie de la première ouverture (40a) dans la première direction (X) et est connectée au dissipateur thermique (60).

6. Le bloc-batterie (100) selon l'une quelconque des revendications 1 à 5, dans lequel l'unité de boîtier (10) comprend un premier boîtier (11) ;
le premier boîtier (11) comprend une première paroi (111) et une deuxième paroi (112) disposées dans la troisième direction (Z), une troisième paroi (113) et une quatrième paroi (114) disposées dans la deuxième direction (Y), et une paroi inférieure (115) ;
la paroi inférieure (115) étant connectée à la première paroi (111), la deuxième paroi (112), la troisième paroi (113) et la quatrième paroi (114) de manière à former un premier espace (101) ;
le dissipateur thermique (60) étant disposé dans le premier espace (101) ; le dissipateur thermique (60) étant connecté aux surfaces internes de la première paroi (111), de la deuxième paroi (112), de la troisième paroi (113) et de la quatrième paroi (114) ; et la troisième direction (Z) étant perpendiculaire à la fois à la première direction (X) et à la deuxième direction (Y).

7. Le bloc-batterie (100) selon l'une quelconque des revendications 1 à 6, comprenant en outre un premier élément de connexion (70), le premier élément de connexion (70) étant partiellement disposé entre le support (40) et le dissipateur thermique (60), et le support (40) et le dissipateur thermique (60) étant fixés l'un à l'autre par l'intermédiaire du premier élément de connexion (70).

8. Le bloc-batterie (100) selon la revendication 7, dans lequel, dans la première direction (X), un côté du support (40) faisant face au dissipateur thermique (60) est pourvu d'une première partie convexe (46), la première partie convexe (46) étant connectée au dissipateur thermique (60), un premier espace (40b) étant défini entre le support (40) et le dissipateur thermique (60), et le premier élément de connexion (70) étant partiellement disposé dans le premier espace (40b).

9. Le bloc-batterie (100) selon la revendication 7 ou 8, dans lequel le premier élément de connexion (70) est partiellement disposé entre la première carte de circuit imprimé (30) et le support (40), et le support (40) et la première carte de circuit imprimé (30) étant connectés par le premier élément de connexion (70).

10. Le bloc-batterie (100) selon l'une quelconque des revendications 7 à 9, dans lequel un côté du support (40) faisant face à la première carte de circuit imprimé (30) est pourvu d'une deuxième partie convexe (47) dans la direction (X') opposée à la première direction (X), la deuxième partie convexe (47) étant connectée à la première carte de circuit imprimé (30), un deuxième espace (40c) étant défini entre le support (40) et la première carte de circuit imprimé (30), et le premier élément de connexion (70) étant partiellement disposé dans le deuxième espace (40c).

11. Le bloc-batterie (100) selon l'une quelconque des revendications 7 à 10, dans lequel le premier élément de connexion (70) recouvre une partie de la borne d'électrode (213) s'étendant à l'extérieur du boîtier de cellule (211).

12. Le bloc-batterie (100) selon l'une quelconque des revendications 7 à 11, dans lequel le premier élément de connexion (70) est configuré pour être formé par injection d'un premier matériau isolant fluide dans le bloc-batterie (100), puis durcissement dudit matériau isolant.

13. Le bloc-batterie (100) selon la revendication 6, dans lequel le premier boîtier (11) est pourvu d'un premier orifice (10a) et d'un deuxième orifice (10b), et le dissipateur thermique (60) est pourvu d'un premier canal (60a) ; le premier canal (60a) communiquant avec le premier orifice (10a) et le deuxième orifice (10b).

14. Un dispositif électrique (200), comprenant le bloc-batterie (100) selon l'une quelconque des revendications 1 à 13.
